# EUROPÄISCHE PATENTSCHRIFT

(11) **EP 3 915 456 B1**
(45) Veröffentlichungstag und Bekanntmachung des Hinweises auf die Patenterteilung: **03.07.2024**
(21) Anmeldenummer: 21173296.1
(22) Anmeldetag: 11.05.2021
(51) Int. Cl.: A47L 15/24, A47L 15/42, A47L 15/00, B25J 9/16

(54) **SYSTEM ZUM BELADEN MINDESTENS EINER TRANSPORTSPÜLMASCHINE MIT SPÜLGUTTEILEN, ANORDNUNG AUS MINDESTENS EINER TRANSPORTSPÜLMASCHINE UND EINEM BELADESYSTEM SOWIE VERFAHREN ZUM BELADEN MINDESTENS EINER TRANSPORTSPÜLMASCHINE MIT SPÜLGUTTEILEN**
SYSTEM FOR LOADING AT LEAST ONE TRANSPORT DISHWASHER WITH ITEMS TO BE WASHED, ARRANGEMENT COMPRISING AT LEAST ONE TRANSPORT DISHWASHER AND A LOADING SYSTEM AND METHOD FOR LOADING AT LEAST ONE TRANSPORT DISHWASHER WITH ITEMS TO BE WASHED
SYSTÈME DE CHARGEMENT DE VAISSELLES DANS AU MOINS UN LAVE-VAISSELLE MOBILE, AGENCEMENT D'AU MOINS UN LAVE-VAISSELLE MOBILE ET D'UN SYSTÈME DE CHARGEMENT, AINSI QUE PROCÉDÉ DE CHARGEMENT DE VAISSELLES DANS AU MOINS UN LAVE-VAISSELLE MOBILE

(30) Priorität: 28.05.2020 DE 102020114364
(43) Veröffentlichungstag der Anmeldung: 01.12.2021
(73) Patentinhaber: Illinois Tool Works, Inc., Glenview, Illinois 60025 (US)
(72) Erfinder: SCHREMPP, Martin, Glenview, Illinois 60025 (US); DISCH, Harald, Glenview, Illinois 60025 (US); BOLDT, Adrian, Glenview, Illinois 60025 (US)
(74) Vertreter: Meissner Bolte Partnerschaft mbB

(56) Entgegenhaltungen:
- EP-A2- 2 158 833
- WO-A1-2012/173479
- WO-A1-2020/163140
- WO-A1-2021/116363
- DE-T5-112017 004 082

## Beschreibung

Die vorliegende Erfindung betrifft allgemein das Fachgebiet des gewerblichen Spülens. Insbesondere betrifft die Erfindung ein System zum Beladen mindestens einer Transportspülmaschine mit Spülgutteilen. Die Erfindung betrifft ferner ein Verfahren zum Beladen mindestens einer Transportspülmaschine mit Spülgutteilen.

Transportspülmaschinen der erfindungsgemäßen Transportspülmaschinenanordnung sind insbesondere gewerbliche Transportspülmaschinen und können als Bandtransportspülmaschinen oder als Korbtransportspülmaschinen ausgebildet sein.

Transportspülmaschinen (conveyor warewasher) finden im gewerblichen Bereich Anwendung. Im Gegensatz zu Haushaltsspülmaschinen, in welchen das zu reinigende Spülgut während der Reinigung ortsfest in der Maschine verbleibt, findet bei Transportspülmaschinen ein Transport des Spülguts durch verschiedene Behandlungszonen der Maschine statt.

Bei Transportspülmaschinen wird das Spülgut (wash wäre), wie beispielsweise Tabletts, Geschirr, Töpfe, Gläser, Besteck und andere zu reinigende Utensilien, durch mehrere Behandlungszonen, wie z. B. Vorwaschzone(n), Hauptwaschzone(n), Nachwasch- bzw. Vorspülzone(n), Klarspülzone(n) und Trocknungszone(n), gefördert. Für den Transport von Spülgut in einer Transportrichtung durch die Transportspülmaschine kommt eine Transportvorrichtung zum Einsatz, die in der Regel mindestens eine Transportspur mit Fächern zur Aufnahme von Spülgut aufweist. Bei einer Bandtransportspülmaschine können die Fächer durch Stützfinger auf einem die Transportspur definierenden Transportband der Transportvorrichtung gebildet sein. Bei Korbtransportspülmaschinen dienen als Transportvorrichtung Geschirrkörbe, in denen zur Aufnahme des zu behandelnden Spülguts Fächer ausgebildet sein können. Denkbar hierbei ist es, dass die Geschirrkörbe mit einer Fördereinrichtung einer Transportspur durch die Korbtransportspülmaschine transportiert werden.

Üblicherweise wird das zu reinigende Spülgut vor dem Einstellen in das Transportband vorsortiert. Beispielsweise ist aus der Druckschrift US 6,530,996 B2 eine Korbtransportspülmaschine bekannt, bei welcher das zu behandelnde Spülgut vorsortiert in Geschirrkörben den jeweiligen Behandlungszonen zugeführt wird. Druckschrift WO 2020/163140 A1, welche Stand der Technik nach Artikel 54(3) EPÜ darstellt, offenbart ein System zum Beladen einer Geschirrspülmaschine, mit einem Zuführförderband, einer Sortiereinrichtung und einer Beladeeinrichtung zum automatischen Beladen der Transportspülmaschine mit Spülgut gemäß vordefinierten oder vorgebbaren Spülgutgruppen.

Druckschrift WO 2021/116363 A1, welche ebenfalls Stand der Technik nach Artikel 54(3) EPÜ darstellt, offenbart ein modulares System zur Beladung einer Transportvorrichtung einer Transportspülmaschine, umfassend ein Erkennungsmodul zur Erfassung von Zustandsdaten von angeliefertem Reinigungsgut, eine Mehrzahl von austauschbaren Handhabungsmodulen, wobei die Handhabungsmodule jeweils eingerichtet sind, um eine individuelle Handhabungsfunktion zur Handhabung des Reinigungsguts unter Verwendung mindestens eines Aktors auszuführen und eine Zuführeinheit zur selektiven Zuführung des angelieferten Reinigungsguts an die Handhabungsmodule.

Druckschrift WO 2012/173479 A1 offenbart ein Verfahren und ein System zur Reinigung von verschmutztem Geschirr, bei denen die Greifpositionen der zugeführten Teile des verschmutzten Geschirrs durch ein Bildverarbeitungssystem erfasst werden.

Druckschrift EP 2 158 833 A2 offenbart eine Reinigungsvorrichtung mit einer Handhabungseinrichtung, bei der vorgelegtes Spülgut zumindest teilweise automatisch aufgenommen und an eine Transportvorrichtung übergeben wird.

Transportspülmaschinen werden insbesondere in großen Einrichtungen, wie Mensen und Kantinen eingesetzt, um große Mengen an verschmutztem Spülgut möglichst wirtschaftlich zu reinigen. Mit Transportspülmaschinen der derzeit bekannten Art können mehrere hundert Gedecksätze pro Stunde gereinigt werden. Untersuchungen haben gezeigt, dass im Durchschnitt jeder Gedecksatz in der Regel aus einem Tablett, einem Teller, ein bis zwei Schälchen, einem Trinkglas sowie einem Bestecksatz besteht.

In fast sämtlichen Großküchen, wie beispielsweise Betriebskantinen oder Mensen, wird das von den Essensteilnehmern genutzte Spülgut (Geschirr, Trinkgläser, Besteck, etc.) auf Tabletts zurückgegeben. Von der Rückgabestation werden die Gedecksätze in die Spülküche transportiert. Üblicherweise erfolgt der Transport der Gedecksätze mit einem entsprechenden Zufuhrförderband. Dabei wird der Gedecksatz mit einem Förderband von der Rückgabestation in die Spülküche direkt zu einem Beladebereich der Transportspülmaschine befördert.

Im Belade- bzw. Zulaufbereich der Transportspülmaschine werden dann üblicherweise die Spülgutteile manuell vom Bedienpersonal abgenommen und in das Transportband der Transportspülmaschine einsortiert.

Im Hinblick auf Tabletts oder tablettartige Gegenstände geschieht die Vorsortierung üblicherweise derart, dass der Geschirr- und Bestecksatz von dem Bedienpersonal manuell von einem zu reinigenden Tablett abgenommen wird und das Tablett anschließend vor der Transportvorrichtung bzw. im Zulaufbereich (Schmutzseite) der Transportspülmaschine gestapelt wird. Die Tabletts aus diesem Tablettstapel werden von Zeit zu Zeit sortenrein in das Transportband der Transportspülmaschine eingestellt und gereinigt.

Dieses sortenreine Vorgehen hat den Vorteil, dass Tabletts keinen Sprühschatten auf kleinere, hinter den Tabletts eingestapelten Spülgutteile werfen können. Weiterhin ist durch dieses Vorgehen der Arbeitsablauf des Ein- und Abstapelns stark vereinfacht und effizienter im Vergleich zu einer durch Mischung des Spülguts mit den zu reinigenden Tabletts.

Während die Tabletts aus diesem Tablettstapel sortenrein in das Transportband der Transportspülmaschine eingestellt und gereinigt werden, ist es allerdings nicht möglich, anderes Spülgut zu reinigen, wie beispielsweise Teller, Schälchen oder anderes Geschirr, da die in das Transportband einzustellenden Tabletts üblicherweise quer zur Transportrichtung in das Transportband eingestellt werden müssen und so die gesamte zur Verfügung stehende Fläche des Transportbandes ausfüllen. Im Vergleich zu anderen Spülgutarten muss von daher für die Reinigung von Tabletts relativ viel Zeit aufgewendet werden.

Weiterhin muss das Bedienpersonal der Transportspülmaschine am Maschineneinlass jedes Tablett zwei Mal in seinen Arbeitsablauf einbinden: das erste Mal beim Abnehmen der Besteck- und Geschirrteile von dem zu reinigenden Tablett, und das zweite Mal beim eigentlichen Einstellen der Tabletts in das Transportband der Transportspülmaschine.

Bei dem beschriebenen Arbeitsprozess ist der manuelle Aufwand besonders hoch. Jedes Spülgutteil (Geschirrteil) eines jeden Gedecksatzes muss einzeln manuell vom Tablett abgenommen und in das Transportband der Spülmaschine eingestellt werden.

Ferner, müssen die einzelnen Besteckteile je Gedecksatz manuell von dem Tablett entnommen und ebenfalls der Transportspülmaschine zugeführt werden. Anschließend erfolgt die zuvor beschriebene Behandlung der eigentlichen Tabletts.

Bei einer Maschinenkapazität von mehreren tausend Tellern pro Stunde muss insbesondere möglichst schnell und effizient gearbeitet werden, wodurch die körperliche Belastung des Bedienpersonals steigt.

Auf Grundlage dieser Problemstellung liegt der vorliegenden Erfindung die Aufgabe zu Grunde, eine Lösung für Transportspülmaschinen der eingangs genannten Art anzugeben, bei welcher es möglich ist, den gesamten Wasch- und Spülprozess effizienter zu gestalten, wodurch insbesondere die Arbeitszeit des Spülpersonals gekürzt und der Ressourcenverbrauch der Spülmaschinenanordnung reduziert werden kann.

Im Hinblick auf das Beladesystem wird die der Erfindung zugrundeliegende Aufgabe erfindungsgemäß durch den Gegenstand der unabhängigen Patentansprüche 1 und 3 gelöst, wobei vorteilhafte Weiterbildungen des erfindungsgemäßen Beladesystems in den entsprechenden abhängigen Patentansprüchen angegeben sind.

Im Hinblick auf das Verfahren wird die der Erfindung zugrundeliegende Aufgabe ferner durch den Gegenstand des nebengeordneten Patentanspruchs 14 gelöst.

Demgemäß betrifft die Erfindung ein System zum Beladen mindestens einer Transportspülmaschine mit Spülgutteilen, wobei das Beladesystem ein Zufuhrförderband aufweist, um Spülgutteile zu mindestens einem Beladebereich der mindestens einen Transportspülmaschine zuzuführen.

Gemäß der Erfindung ist ein Erfassungssystem vorgesehen, welches vorzugsweise als optisches Erfassungssystem ausgeführt und ausgebildet ist, beim Zuführen der Spülgutteile zu dem mindestens einen Beladebereich der mindestens einen Transportspülmaschine mindestens einen der nachfolgend aufgeführten Parameter der Spülgutteile auf dem Zufuhrförderband zu erfassen:
i) eine Art mindestens eines Spülgutteils der Spülgutteile und/oder eine relative Position mindestens eines Spülgutteils der Spülgutteile auf dem Zufuhrförderband;
ii) einen Verschmutzungsgrad mindestens eines Spülgutteils der Spülgutteile auf dem Zufuhrförderband;
iii) eine Ordnung der Spülgutteile auf dem Zufuhrförderband; und/oder
iv) eine relative Ausrichtung mindestens eines Spülgutteils der Spülgutteile auf dem Zufuhrförderband, und zwar relativ zu dem Zufuhrförderband.

In vorteilhafter Weise ist das Erfassungssystem ausgebildet, direkt mindestens einen der zuvor genannten Parameter der Spülgutteile zu erfassen. Hierzu bietet es sich an, dass das Erfassungssystem eine Spülgutdetektorvorrichtung aufweist, die dazu dient, mindestens einen der zuvor genannten Parameter mindestens eines Spülgutteils der Spülgutteile zu erfassen.

Unter dem hier verwendeten Begriff "Spülgutdetektorvorrichtung" ist jedwede Detektionsvorrichtung zu verstehen, welche ausgelegt ist, mindestens einen der zuvor genannten Parameter des über das Zufuhrförderband zugeführten Spülgutes zu erfassen bzw. zu bestimmen. Denkbar hierbei ist es insbesondere, dass die Spülgutdetektorvorrichtung wenigstens eine Detektoreinrichtung aufweist, mit welcher mindestens ein Parameter der nachfolgend aufgeführten Parameter erfasst werden kann:
a) eine Größe mindestens eines Spülgutteils der über das Zufuhrförderband zugeführten Spülgutteile;
b) eine Formgebung mindestens eines Spülgutteils der über das Zufuhrförderband zugeführten Spülgutteile;
c) das Material mindestens eines Spülgutteils der über das Zufuhrförderband zugeführten Spülgutteile;
d) die relative Position mindestens eines Spülgutteils der über das Zufuhrförderband zugeführten Spülgutteile im Hinblick auf beispielsweise einen Randbereich des Zufuhrförderbands und/oder im Hinblick auf eine Markierung beispielsweise des Zufuhrförderbands;
e) einen Verschmutzungsgrad mindestens eines Spülgutteils der über das Zufuhrförderband zugeführten Spülgutteile;
f) die Ordnung einer Gruppe von über das Zufuhrförderband zugeführten Spülgutteile; und/oder
g) die relative Ausrichtung mindestens eines Spülgutteils über das Zufuhrförderband zugeführten Spülgutteile.

Gemäß denkbaren Realisierungen kann die Spülgutdetektorvorrichtung wenigstens eine vorzugsweise optisch, induktiv oder kapazitiv arbeitende Detektoreinrichtung aufweisen, so dass zur Identifizierung einer der zuvor genannten Parameter die Größe, die Formgebung, das Material, der Verschmutzungsgrad, die relative Position, die Ordnung und/oder die relative Ausrichtung der einzelnen Spülgutteile erfasst werden können/kann.

Als Detektoreinrichtung kommen insbesondere induktiv arbeitende Näherungssensoren, Lichttaster, Lichtvorhänge, Laserscanner, 3D-Laser, Kameras, Drehgeber, oder eine Kombination hiervon in Frage.

In bevorzugten Ausführungsformen des erfindungsgemäßen Beladesystems weist das Erfassungssystem mindestens ein Kamerasystem zum optischen Erfassen von mindestens einem der zuvor genannten Parameter auf.

Bei dem erfindungsgemäßen Beladesystem ist vorgesehen, dass dem zuvor beschriebenen Erfassungssystem eine Auswerteeinrichtung zugeordnet ist, welche ausgebildet ist, in Abhängigkeit von mindestens einem mit Hilfe des Erfassungssystems erfassten Parameter die Zuführung der über das Zufuhrförderband zugeführten Spülgutteile bzw. mindestens eines Spülgutteils der über das Zufuhrförderband zugeführten Spülgutteile zu dem mindestens einen Beladesystem zu steuern.

Unter dem hierin verwendeten Begriff "Steuern der Zuführung der Spülgutteile zu dem mindestens einen Beladesystem" ist insbesondere zu verstehen, dass in Abhängigkeit von mindestens einem mit Hilfe des Erfassungssystems erfassten Parameter die Zuführung von mindestens einem Spülgutteil der über das Zufuhrförderband zugeführten Spülgutteile zu dem mindestens einen Beladesystem zugelassen oder nicht zugelassen wird, d.h. insbesondere aktiv verhindert wird.

Das erfindungsgemäße Beladesystem weist zusätzlich eine Beladeanordnung mit mindestens einem Manipulator auf, welcher ausgebildet ist, automatisch Spülgutteile von dem Zufuhrförderband abzunehmen und auf mindestens einer Transportspur der mindestens einen Transportspülmaschine zu platzieren.

Insbesondere ist der mindestens eine Manipulator der zu den erfindungsgemäßen Beladesystem gehörenden Beladeanordnung ausgebildet, automatisch Spülgutteile von dem Zufuhrförderband abzunehmen und insbesondere auf einer dedizierten Transportspur der mindestens einen Transportspülmaschine zu platzieren, und zwar dann, wenn mit der dem Erfassungssystem zugeordneten Auswerteeinrichtung ermittelt wird, dass eine Zuführung der Spülgutteile bzw. eine Zuführung des mindestens einen Spülgutteils der über das Zufuhrförderband zugeführten Spülgutteile zu dem mindestens einen Beladebereich der mindestens einen Transportspülmaschine zuzulassen ist.

Bei Ausführungsformen des erfindungsgemäßen Beladesystems, bei welchen die eine entsprechende Beladeanordnung vorgesehen ist, bietet es sich an, dass die dem Erfassungssystem zugeordnete Auswerteeinrichtung ferner oder optional ausgebildet ist, den mindestens einen Manipulator der Beladeanordnung entsprechend anzusteuern, um insbesondere in Abhängigkeit von mindestens einem mit Hilfe des Erfassungssystems erfassten Parameter den Manipulator der Beladeanordnung entsprechend zu steuern, so dass die Spülgutteile bzw. das mindestens eine Spülgutteil der über das Zufuhrförderband zugeführten Spülgutteile von dem Manipulator erfasst und insbesondere auf mindestens einer Transportspur der mindestens einen Transportspülmaschine geeignet platziert werden/wird.

Mit dem erfindungsgemäßen Beladesystem kann zudem die vorzugsweise aus mehreren Transportspülmaschinen bestehende Transportspülmaschinenanordnung mit verschiedenen Ausbaustufen zur Automatisierung von manuellen Be- und Entladearbeitsschritten ausgestaltet werden.

Eine erste Ausbaustufe kann darin bestehen, dass die Transportspülmaschinenanordnung eine einzige Transportspülmaschine aufweist, wobei die einzige Transportspülmaschine der Transportspülmaschinenanordnung neben einem Haupttransportband auch beispielsweise über eine Tablettspur (Tablett-Transportband) verfügt, wobei diese Tablettspur vorzugsweise parallel neben dem Haupttransportband angeordnet ist.

Bei dieser Ausbaustufe werden beispielsweise die Gedecksätze, wie bereits beschrieben, entweder direkt durch den Essensteilnehmer oder durch das Spülpersonal auf das Zufuhrförderband des Beladesystems abgestellt. Wenn mit Hilfe des Erfassungssystems erfasst wird, dass das eine Zufuhr des auf dem Zufuhrförderband abgestellten Spülguts zu dem mindestens einen Beladebereich der mindestens einen Transportspülmaschine zuzulassen ist, fördert das Zufuhrförderband dann die Gedecksätze zum Zulauf- bzw. Beladebereich der mindestens einen Transportspülmaschine. Dort können beispielsweise die Besteck- und Geschirrteile manuell von den Tabletts abgenommen werden. Die manuell abgenommenen Geschirrteile können dann manuell in das Haupttransportband der Transportspülmaschine einsortiert werden. Die abgenommenen Besteckteile können in Spülkörben gesammelt und im weiteren Verlauf in der Transportspülmaschine gereinigt werden.

Mit der ersten Ausbaustufe werden die Tabletts nicht mehr manuell in die Spülmaschine einsortiert. Diese werden über das Zufuhrförderband beispielsweise parallel in Richtung des Maschinenzulaufs der mindestens einen Transportspülmaschine weitergefördert und dort beispielsweise über eine Eintaktvorrichtung oder Einstellvorrichtung automatisch in ein spezielles Tablett-Transportband (Tablettspur) eingebracht. Diese Tablettspur verläuft vorzugsweise parallel zum Haupttransportband.

Gemäß einer zweiten Ausbaustufe kann zusätzlich zu der zuvor genannten Tablettspur eine separate Besteckspur vorhanden sein. Diese Besteckspur verläuft vorzugsweise ebenfalls parallel zur und direkt neben der Tablettspur. Denkbar in diesem Zusammenhang ist es aber auch, dass die Tablettspur Teil einer Transportvorrichtung einer ersten Transportspülmaschine der Transportspülmaschinenanordnung und dass die Besteckspur Teil einer Transportvorrichtung einer zweiten Transportspülmaschine der Transportspülmaschinenanordnung ist.

Wie zuvor beschrieben, können die Gedecksätze über das Zufuhrförderband des Beladesystems an den Zulauf- bzw. Beladebereich einer der Transportspülmaschinen der Transportspülmaschinenanordnung gefördert werden. Bei dieser zweiten Ausbaustufe müssen nun nur noch die Geschirrteile und die Gläser von den zugeführten Tabletts manuell abgenommen und in ein Haupttransportband der Transportspülmaschine oder in ein Haupttransportband einer weiteren Transportspülmaschine einsortiert werden.

Das Tablett und das darauf befindliche Besteck verbleiben auf dem Zufuhrförderband. Dieses wird zu einer Eintaktvorrichtung für Besteck, wie beispielsweise einem Besteckabhebemagneten, weitergefördert. Hier können die Besteckteile automatisch von den Tabletts abgenommen und in eine Besteckspur einer der Transportspülmaschinen der Transportspülmaschinenanordnung eingebracht werden. Anschließend wird das Tablett zur Eintaktvorrichtung gefördert, wo es automatisch in eine Tablettspur einer der Transportspülmaschinen der Transportspülmaschinenanordnung eingeladen wird.

Um zusätzlich hierzu die zur Beladung der mindestens einen Transportspülmaschine der Transportspülmaschinenanordnung notwendigen manuellen Handhabungsschritte weiter zu reduzieren, ist gemäß Weiterbildungen des erfindungsgemäßen Beladesystems vorgesehen, dass auch Teller und Schälchen automatisch in die mindestens eine Transportspülmaschine und insbesondere in ein Haupttransportband der mindestens einen Transportspülmaschine einsortiert werden können.

Auf diese Weise können insgesamt somit manuelle Arbeitsschritte und damit der Arbeitsaufwand für das Spülpersonal eingespart werden, da das Spülpersonal im Idealfall die Transportspülmaschine(n) nicht mehr manuell beladen muss. Insbesondere gewährleistet das erfindungsgemäße Beladesystem eine möglichst ergonomische und benutzerfreundliche Bedienung der mindestens einen Transportspülmaschine, da ein manuelles Beladen der Spülgutteile in die Transportspülmaschine(n) nicht mehr erforderlich ist.

Zusätzlich hierzu wird mit dem erfindungsgemäßen Beladesystem das Reinigungsergebnis der Spülmaschinenanordnung verbessert, da sämtliches Spülgut einer festgelegten Spülgutgruppe einheitlich auf einer für dieses Spülgut vorgesehenen Transportspur der mindestens einen Transportspülmaschine orientiert ist. Darüber hinaus lässt sich der Entladeprozess vereinfachen, da jede Spülgutgruppe auf einer definierten Transportspur durch die mindestens eine Transportspülmaschine der Transportspülmaschinenanordnung transportiert werden kann und somit bereits vorsortiert am Entladebereich der Transportspülmaschinenanordnung ankommt.

Gemäß Realisierungen des erfindungsgemäßen Beladesystems ist vorgesehen, dass das Erfassungssystem ausgebildet ist, beim Zuführen der Spülgutteile zu dem mindestens einen Beladebereich der mindestens einen Transportspülmaschine insbesondere anhand der Größe, der Formgebung und/oder anhand des Materials der Spülgutteile mindestens eine Spülgutart der nachfolgend aufgeführten Spülgutarten zu erfassen:
- eine erste Spülgutart, welche aus einem Metall, insbesondere Edelstahl, gefertigtes Besteck und/oder Besteckteile umfasst;
- eine zweite Spülgutart, welche aus einem Metall, insbesondere Edelstahl, gefertigte Behälter, insbesondere GN-Behälter und/oder Töpfe umfasst;
- eine dritte Spülgutart, welche aus einem Kunststoffmaterial gefertigte Tabletts oder tablettartige Gegenstände umfasst;
- eine vierte Spülgutart, welche aus Porzellan, einem porzellanartigen Material oder aus Steingut gefertigte Geschirrteile, insbesondere Teller, Tassen und/oder Schälchen erfasst; und/oder
- eine fünfte Spülgutart, welche aus Glas oder einem glasartigen Material gefertigte Geschirrteile und/oder Gläser, insbesondere Trinkgläser, umfasst.

Hierbei ist gemäß Ausführungsformen die Auswerteeinrichtung insbesondere ausgebildet, in Abhängigkeit von einer erfassten Spülgutart den mindestens einen Manipulator der Beladeanordnung derart anzusteuern, dass das Spülgutteil der erfassten Spülgutart von dem mindestens einen Manipulator von dem Zufuhrförderband abgenommen und auf einer insbesondere der erfassten Spülgutart zugeordneten Transportspur der mindestens einen Transportspülmaschine platziert wird.

Denkbar in diesem Zusammenhang ist, dass die zu dem Beladesystem gehörende Beladeanordnung mehrere Manipulatoren aufweist, wobei jeder Manipulator des Beladesystems mindestens einer zuvor festgelegten oder festlegbaren Spülgutart, insbesondere mindestens einer zuvor festgelegten oder festlegbaren Spülgutart der oben genannten Spülgutarten zugeordnet und/oder ausgebildet ist, Spülgut mindestens einer zuvor festgelegten oder festlegbaren Spülgutart, insbesondere Spülgut mindestens einer zuvor festgelegten oder festlegbaren Spülgutart der oben genannten Spülgutarten von dem Zufuhrförderband zu greifen und das gegriffene Spülgutteil vorzugsweise automatisch auf einer dem Spülgutteil zugeordneten, dedizierten Transportspur der mindestens einen Transportspülmaschine abzulegen.

Gemäß Ausführungsformen des erfindungsgemäßen Beladesystems ist die Sortieranordnung nicht nur ausgebildet, die Spülgutart der über das Zufuhrförderband zugeführten Spülgutteile automatisch zu erfassen, sondern auch durch die zusätzliche Funktionalität, wonach diese ausgelegt ist, jede erfasste Spülgutart einer vorab festgelegten oder festlegbaren Spülgutgruppe zuzuordnen.

Beispielsweise ist die Sortieranordnung ausgebildet, dass über das Zufuhrförderband geführte Spülgut nach mindestens Folgende Spülgutgruppen zu sortieren:
- eine erste Spülgutgruppe, welche aus einem Metall, insbesondere Edelstahl gefertigtes Besteck und/oder Besteckteile umfasst;
- eine zweite Spülgutgruppe, welche aus einem Kunststoffmaterial gefertigte Tabletts und tablettartige Gegenstände umfasst; und
- eine dritte Spülgutgruppe, welche aus Porzellan oder einem porzellanartigen Material gefertigte Geschirrteile, insbesondere Teller, Tassen und/oder Schälchen, umfasst.

Mit Hilfe dieser Zuordnung wird der Erkenntnis Sorge getragen, das Spülgut unterschiedlicher Spülgutarten, welche beim Zulauf- bzw. Beladebereich der Transportspülmaschinenanordnung in identische Transportspuren einsortiert werden können, in eine Spülgutgruppe zusammengefasst wird.

Insbesondere ist es von Vorteil, dass die Beladeanordnung eine Vielzahl von Manipulatoren aufweist, welche ausgebildet sind, sukzessiv das über das Zufuhrförderband zugeführte Spülgut zu erfassen bzw. ergreifen und dann das Spülgut in dedizierte Transportspuren der mindestens einen Transportspülmaschine der einzuordnen. Die Manipulatoren sind vorzugsweise - in Transportrichtung des Zufuhrförderbandes gesehen - zumindest bereichsweise hintereinander angeordnet.

Damit das automatische Beladesystem vollautomatisch arbeiten kann, ist den einzelnen Manipulatoren des Beladesystems jeweils mindestens eine Spülgutgruppe zugeordnet.

Beispielsweise weist die Beladeanordnung mindestens einen ersten Manipulator auf, der ausgebildet ist, vorzugsweise automatisch eine erste Transportspur einer der Transportspülmaschinen der Transportspülmaschinenanordnung mit Spülgut der ersten Spülgutgruppe zu beladen, wobei ferner die Beladeanordnung vorzugsweise mindestens einen zweiten Manipulator aufweist, der ausgebildet ist, vorzugsweise automatisch eine zweite Transportspur einer der Transportspülmaschinen der Transportspülmaschinenanordnung mit Spülgut der zweiten Spülgutgruppe zu beladen, und wobei ferner vorzugsweise das Beladesystem mindestens einen dritten Manipulator aufweist, der ausgebildet ist, vorzugsweise automatisch eine dritten Transportspur einer der Transportspülmaschinen der Transportspülmaschinenanordnung mit Spülgut der dritten Spülgutgruppe zu beladen.

Um kompatibel mit den zuvor beschriebenen beiden Ausbaustufen zur Automatisierung von manuellen Be- und Entladearbeitsschritten zu sein, ist vorzugsweise der mindestens eine dritte Manipulator - in Transportrichtung des Zufuhrförderbandes gesehen - stromaufwärts des ersten und zweiten Manipulators angeordnet, wobei der erste Manipulator vorzugsweise stromaufwärts des zweiten Manipulators angeordnet ist.

Der mindestens eine dritte Manipulator des Beladesystems, der vorzugsweise ausgebildet ist, eine Transportspülmaschine der Transportspülmaschinenanordnung oder eine dedizierte Transportspur einer Transportspülmaschine der Transportspülmaschinenanordnung mit Spülgut der dritten Spülgutgruppe automatisch zu beladen, ist gemäß bevorzugten Realisierungen des erfindungsgemäßen Beladesystems ausgebildet ist, die über das Zufuhrförderband zugeführten Spülgutteile der dritten Spülgutgruppe zu greifen, von dem Zufuhrförderband abzunehmen und an einer vorab festgelegten oder festlegbaren dedizierten Position abzulegen.

Bei dieser vorab festgelegten oder festlegbaren dedizierten Position handelt es sich beispielsweise um ein Bereich eines Förderbandes einer Transportspülmaschine, insbesondere das Hauptförderband einer Transportspülmaschine.

Alternativ hierzu ist es aber auch denkbar, dass die vorab festgelegte oder festlegbare dedizierte Position in einem Bereich liegt, der sich vorzugsweise außerhalb der Transportspülmaschine befindet und als Stellfläche zum Ausbilden eines Spülgutstapels, insbesondere Geschirrstapels dient.

Gemäß bevorzugten Realisierungen des erfindungsgemäßen Beladesystems weist der mindestens eine dritte Manipulator ein Greifersystem mit mindestens einer Greifzange und/oder mit mindestens einem Sauggreifer auf. Der mindestens eine dritte Manipulator ist dabei vorzugsweise ausgebildet, die über das Zufuhrförderband zugeführten Spülgutteile der dritten Spülgutgruppe zu greifen, von dem Zufuhrförderband abzunehmen und an der genannten vorab festgelegten oder festlegbaren dedizierten Position abzulegen, wobei es sich hierbei entweder um einen Bereich eines Förderbandes, insbesondere Hauptförderbandes, einer Transportspülmaschine der Transportspülmaschinenanordnung oder um eine Stellfläche außerhalb der Transportspülmaschine handelt.

Optional oder zusätzlich hierzu kann der mindestens eine dritte Manipulator des Beladesystems einen ansteuerbaren Magnet für Bestecke oder Besteckteile aufweisen, um auf einen separat hiervon ausgeführten Besteckabhebemagnet verzichten zu können.

In diesem Zusammenhang ist es denkbar, dass der mindestens eine dritte Manipulator eine Ausgangsstellung aufweist, in welcher das Greifersystem des mindestens einen dritten Manipulators derart oberhalb des Zufuhrförderbandes angeordnet ist, dass Spülgutteile der dritten Spülgutgruppe bei deren Transport mit dem Zufuhrförderband in den Greifbereich der mindestens einen Greifzange und/oder des mindestens einen Sauggreifers gefördert werden.

Die Ausgangsstellung des mindestens einen dritten Manipulators ist vorzugsweise derart gewählt, dass nur Spülgutteile der dritten Spülgutgruppe, nicht aber Spülgutteile der ersten oder zweiten Spülgutgruppe beim Transport mit dem Zufuhrförderband in den Greifbereich der mindestens einen Greifzange und/oder des mindestens einen Sauggreifers gefördert werden. Dies ist beispielsweise dadurch realisierbar, indem das Greifersystem von der Ebene, in welcher das Zufuhrförderband liegt, vertikal in geeigneter Weise beabstandet ist.

Grundsätzlich ist es von Vorteil, wenn dem Greifersystem des mindestens einen dritten Manipulators eine entsprechende Sensorik zugeordnet ist, welche ausgebildet ist, zu erfassen, wenn sich mindestens ein Spülgutteil und insbesondere mindestens ein Spülgutteil der dritten Spülgutgruppe in dem Greifbereich der mindestens einen Greifzange und/oder in dem Greifbereich des mindestens einen Sauggreifers befindet. Denkbar in diesem Zusammenhang ist es ferner, dass eine geeignete Steuereinrichtung vorgesehen ist, welche ausgebildet ist, ein Greifen der mindestens einen Greifzange und/oder des mindestens einen Sauggreifers zu initiieren, wenn die dem Greifersystem zugeordnete Sensorik erfasst, dass sich mindestens ein Spülgutteil und insbesondere mindestens ein Spülgutteil der dritten Spülgutgruppe in dem Greifbereich der mindestens einen Greifzange und/oder in dem Greifbereich des mindestens einen Sauggreifers befindet.

In diesem Zusammenhang bietet es sich an, dass die Auswerteeinrichtung ferner ausgebildet ist, den mindestens einen dritten Manipulator des Beladesystems derart anzusteuern, dass dieser das mindestens eine von dem Greifersystem gegriffene mindestens eine Spülgutteil von dem Zufuhrförderband abnimmt und an einer vorab festgelegten oder festlegbaren dedizierten Position ablegt, wie beispielsweise auf dem Hauptförderband einer Transportspülmaschine der Transportspülmaschinenanordnung.

In einer Weiterbildung der zuletzt genannten Ausführungsformen ist dem Greifersystem des mindestens einen dritten Manipulators eine Positionierhilfe zugeordnet, welche mindestens ein Führungselement aufweist, wobei das mindestens eine Führungselement ausgebildet ist, vorzugsweise nur Spülgut der dritten Spülgutgruppe, welches über das Zufuhrförderband zugeführt wird, in Richtung des Greifbereiches der mindestens einen Greifzange und/oder in Richtung des Greifbereiches des mindestens einen Sauggreifers zu lenken.

Alternativ oder zusätzlich hierzu kann dem Greifersystem ein vorzugsweise optisch arbeitendes Erkennungssystem zugeordnet sein, um automatisch das über das Zufuhrförderband zugeführte Spülgut zu erkennen, und insbesondere Spülgut der dritten Spülgutgruppe. Bei dieser Ausführungsform bietet es sich an, eine Steuereinrichtung vorzusehen, welche ausgebildet ist, den mindestens einen dritten Manipulator mit dem Greifersystem zu dem Spülgutteil zu bewegen, wenn mit dem Erkennungssystem ein Spülgutteil der dritten Spülgutgruppe in dem über das Zufuhrförderband zugeführten Spülgut erkannt wird.

Erfindungsgemäß ist die Auswerteeinrichtung ausgebildet, eine Zuführung mindestens eines Spülgutteils zu der Beladeanordnung zu unterbrechen oder nicht zuzulassen, wenn mit dem Erfassungssystem erfasst wird, dass das Spülgutteil nicht zu einer vorab festgelegten oder festlegbaren Spülgutart gehört oder wenn mit dem Erfassungssystem das Spülgutteil nicht einer vorab festgelegten oder festlegbaren Spülgutart zuordenbar ist.

Alternativ oder zusätzlich hierzu ist erfindungsgemäß vorgesehen, dass das Erfassungssystem ausgebildet ist, beim Zuführen der Spülgutteile zu dem mindestens einen Beladebereich der mindestens einen Transportspülmaschine einen Verschmutzungsgrad der Spülgutteile zu erfassen, wobei die Auswerteeinrichtung ausgebildet ist, in Abhängigkeit von dem erfassten Verschmutzungsgrad die Zuführung der Spülgutteile zu der Beladeanordnung zuzulassen oder zu unterbrechen, und/oder wobei die Auswerteeinrichtung ausgebildet ist, in Abhängigkeit von dem erfassten Verschmutzungsgrad den mindestens einen Manipulator der Beladeanordnung derart anzusteuern, dass die Spülgutteile von dem mindestens einen Manipulator von dem Zuführförderband abgenommen und - in Abhängigkeit von dem erfassten Verschmutzungsgrad - entweder auf einer Transportspur der mindestens einen Transportspülmaschine oder in einen Ablagebereich extern der mindestens einen Transportspülmaschine und insbesondere bei einer Vorabräumstation platziert werden.

In diesem Zusammenhang bietet es sich an, dass das Erfassungssystem ausgebildet ist, beim Zuführen der Spülgutteile zu dem mindestens einen Beladebereich der mindestens einen Transportspülmaschine einen Verschmutzungsgrad der Spülgutteile zu erfassen, wobei die Auswerteeinrichtung ausgebildet ist, in Abhängigkeit von dem erfassten Verschmutzungsgrad die Zuführung der Spülgutteile zu der Beladeanordnung zuzulassen oder zu unterbrechen, wobei die Auswerteeinrichtung ferner ausgebildet ist, die Zuführung eines Spülgutteils zu der Beladeanordnung zu unterbrechen, wenn bei dem Spülgutteil ein Verschmutzungsgrad erfasst wird, der einen vorab festgelegten Schwellwert überschreitet.

Insbesondere bei den beiden zuvor genannten Ausführungsvarianten kann das Zufuhrförderband ausgebildet sein, die Spülgutteile chargenweise, beispielsweise auf einem Tablett abgelegte Spülgutteile, dem mindestens einen Beladebereich der mindestens einen Transportspülmaschine zuzuführen. Jede Charge kann somit vorzugsweise ein Tablett mit gegebenenfalls auf dem Tablett abgestellten oder abgelegten Spülgutteilen insbesondere von mindestens einem Gedecksatz umfassen.

Das Erfassungssystem kann zudem insbesondere ausgebildet sein, je Charge den mindestens einen Parameter der Spülgutteile zu erfassen, und wobei die Auswerteeinrichtung ausgebildet ist, in Abhängigkeit von dem erfassten Parameter einer Charge die Zuführung der Charge zu der Beladeanordnung zuzulassen oder zu unterbrechen.

Demnach ist gemäß bevorzugten Realisierungen der Erfindung das Zufuhrförderband insbesondere ausgebildet, die Spülgutteile chargenweise dem mindestens einen Beladebereich der mindestens einen Transportspülmaschine zuzuführen, wobei jede Charge vorzugsweise ein Tablett mit gegebenenfalls auf dem Tablett abgestellten oder abgelegten Spülgutteilen insbesondere von mindestens einem Gedecksatz umfasst.

Es bietet sich in diesem Zusammenhang insbesondere an, dass das Erfassungssystem ausgebildet ist, beim chargenweisen Zuführen der Spülgutteile zu dem mindestens einen Beladebereich der mindestens einen Transportspülmaschine eine Ordnung der Spülgutteile je Charge zu erfassen, wobei die Auswerteeinrichtung ausgebildet ist, in Abhängigkeit von der erfassten Ordnung die Zuführung der Charge der Spülgutteile zu der Beladeanordnung zuzulassen.

Dabei ist die Auswerteeinrichtung vorzugsweise insbesondere ausgebildet, die Zuführung der Charge der Spülgutteile zu der Beladeanordnung zuzulassen, wenn mit dem Erfassungssystem erfasst wird, dass in der Charge die Spülgutteile vereinzelt vorliegen.

Gemäß Weiterbildungen dieses Aspekts ist die Auswerteeinrichtung ausgebildet, die Zuführung der Charge der der Spülgutteile zu der Beladeanordnung nicht zuzulassen bzw. zu unterbrechen, wenn mit dem Erfassungssystem erfasst wird, dass in der Charge eine vorab festgelegte oder festlegbare Anzahl an Spülgutteilen in einer zumindest bereichsweise überlappenden Weise vorliegt.

Bei Ausführungsformen des erfindungsgemäßen Beladesystems kann das Erfassungssystem ausgebildet sein, beim Zuführen der Spülgutteile zu dem mindestens einen Beladebereich der mindestens einen Transportspülmaschine eine relative Ausrichtung mindestens eines der Spülgutteile zu dem Zufuhrförderband zu erfassen. Hierbei ist die Auswerteeinrichtung insbesondere ausgebildet, in Abhängigkeit von der erfassten Ausrichtung des mindestens einen Spülgutteils zu dem Zufuhrförderband die Zuführung zumindest des mindestens einen Spülgutteils zu der Beladeanordnung zuzulassen oder zu unterbrechen.

Beispielsweise ist die Auswerteeinrichtung insbesondere ausgebildet, die Zuführung zu der Beladeanordnung nicht zuzulassen bzw. zu unterbrechen, wenn mit dem Erfassungssystem erfasst wird, dass das mindestens eine Spülgutteil von mindestens einer vorab festgelegten oder festlegbaren Soll-Ausrichtung abweicht.

Gemäß Realisierungen des erfindungsgemäßen Beladesystems ist dem Zufuhrförderband mindestens eine Ausschleusweiche zugeordnet. Die mindestens eine Ausschleusweiche ist vorzugsweise stromaufwärts des mindestens einen Beladebereichs der mindestens einen Transportspülmaschine und stromabwärts des Erfassungssystems angeordnet.

Insbesondere ist die mindestens eine Ausschleusweiche ausgebildet, bedarfsweise mindestens ein Spülgutteil und insbesondere chargenweise Spülgutteile aus dem Zufuhrförderband auszuschleusen. Vorzugsweise ist die Auswerteeinrichtung ausgebildet, die mindestens eine Ausschleusweiche zu aktivieren, wenn eine Zuführung mindestens eines Spülgutteils zu der Beladeanordnung nicht zulässig ist bzw. zu unterbrechen ist.

Gemäß Weiterbildungen ist vorgesehen, dass die mindestens eine Ausschleusweiche ausgebildet ist, bedarfsweise mindestens ein Spülgutteil und insbesondere chargenweise Spülgutteile aus dem Zufuhrförderband in einen Auslaufbereich auszuschleusen, wobei der Auslaufbereich vorzugsweise zur insbesondere manuellen Vorabräumung der in den Auslaufbereich ausgeschleusten Spülgutteile ausgebildet ist.

Alternativ oder zusätzlich hierzu kann vorgesehen sein, dass die mindestens eine Ausschleusweiche ausgebildet ist, bedarfsweise mindestens ein Spülgutteil und insbesondere chargenweise Spülgutteile aus dem Zufuhrförderband in ein Rückführförderband auszuschleusen, wobei das Rückführförderband zumindest bereichsweise insbesondere zur insbesondere manuellen Vorabräumung des mindestens einen in das Rückführförderband ausgeschleusten Spülgutteils ausgebildet ist.

Hierbei kann ein stromaufwärtiger Endbereich des Rückführförderbands fördermäßig mit mindestens einer Einschleusweiche verbunden sein zum zumindest bedarfsweisen (Wieder-)Einschleusen des mindestens einen vorabgeräumten Spülgutteils in das Zufuhrförderband. Gemäß Realisierungen dieses Aspektes bietet es sich an, dass die mindestens eine Einschleusweiche vorzugsweise stromaufwärts des Erfassungssystems in das Zufuhrförderband mündet.

Gemäß einem weiteren (alternativen oder zusätzlichen) Aspekt der Erfindung ist vorgesehen, dass dem Zufuhrförderband mindestens eine Einschleusweiche zugeordnet ist, die ausgebildet ist, bedarfsweise mindestens ein Spülgutteil und insbesondere chargenweise Spülgutteile in das Zufuhrförderband einzuschleusen, wobei die mindestens eine Einschleusweiche vorzugsweise stromaufwärts des Erfassungssystems in das Zufuhrförderband mündet. Vorzugsweise verbindet dabei die mindestens eine Einschleusweiche einen insbesondere zur manuellen Vorabräumung ausgebildeten Bereich fördermäßig mit dem Zufuhrförderband.

Die Erfindung betrifft ferner eine Anordnung aus mindestens einer Transportspülmaschine und einem Beladesystem der zuvor beschriebenen erfindungsgemäßen Art.

Darüber hinaus betrifft die Erfindung ein Verfahren zum Beladen mindestens einer Transportspülmaschine mit Spülgutteilen. Bei dem Verfahren werden Spülgutteile zu mindestens einem Beladebereich der mindestens einen Transportspülmaschine zugeführt, wobei beim Zuführen der Spülgutteile zu dem mindestens einen Beladebereich der mindestens einen Transportspülmaschine mindestens einer der nachfolgenden Parameter der Spülgutteile erfasst wird:
i) eine Art der Spülgutteile und/oder eine relative Position der Spülgutteile;
ii) einen Verschmutzungsgrad der Spülgutteile; und/oder
iii) eine Ordnung der Spülgutteile und/oder eine Ausrichtung der Spülgutteile.

Das erfindungsgemäße Verfahren zeichnet sich insbesondere dadurch aus, dass in Abhängigkeit von mindestens einem der erfassten Parameter eine Zuführung der Spülgutteile zu dem mindestens einen Beladebereich der mindestens einen Transportspülmaschine gesteuert wird.

Nachfolgend werden exemplarische Ausführungsformen der erfindungsgemäßen Lösung anhand der Zeichnungen näher beschrieben.

Es zeigen:
- FIG. 1: schematisch und in einer Draufsicht die Beladebereiche einer zwei Transportspülmaschinen umfassenden Transportspülmaschinenanordnung mit einer ersten exemplarischen Ausführungsform des erfindungsgemäßen Beladesystems;
- FIG. 2: schematisch und in einer Draufsicht die Beladebereiche einer zwei Transportspülmaschinen umfassenden Transportspülmaschinenanordnung mit einer zweiten exemplarischen Ausführungsform des erfindungsgemäßen Beladesystems; und
- FIG. 3: schematisch und in einer Draufsicht die Beladebereiche einer zwei Transportspülmaschinen umfassenden Transportspülmaschinenanordnung mit einer dritten exemplarischen Ausführungsform des erfindungsgemäßen Beladesystems.

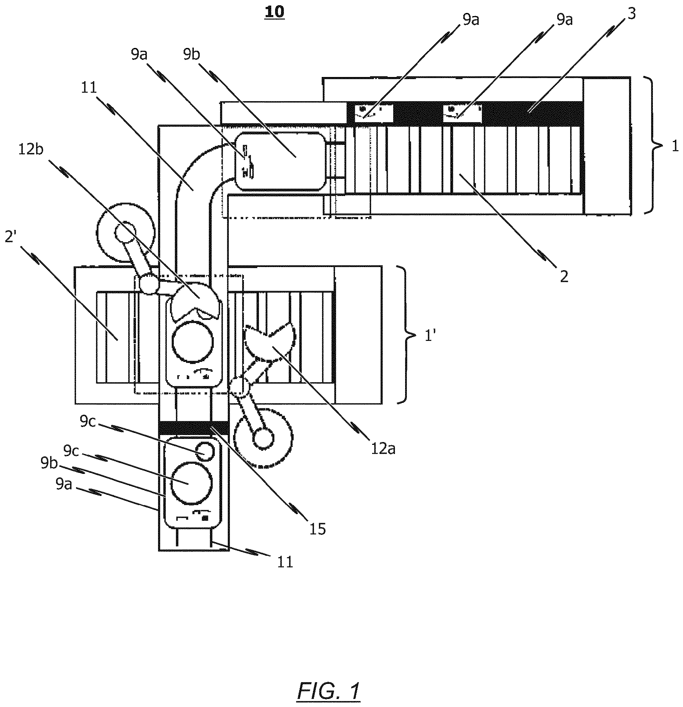

In FIG. 1 sind schematisch und in einer Draufsicht die Beladebereiche zweier nur bereichsweise gezeigten Transportspülmaschinen 1 gezeigt.

Eine erste der beiden Transportspülmaschinen 1 weist eine Transportvorrichtung (Hauptförderband 2, Besteckförderband 3) zum Transportieren von Spülgut 9a, 9b in einer Transportrichtung durch die Transportspülmaschine 1 auf. Die Transportvorrichtung ist insbesondere ausgebildet, um gleichzeitig mehrere nebeneinander angeordnete Spülgutarten in den Behandlungszonen der Transportspülmaschine 1 behandeln zu lassen, um auf diese Weise den gesamten Wasch- und Spülprozess effizienter zu gestalten, wodurch insbesondere die Arbeitszeit des Spülpersonals gekürzt und der Ressourcenverbrauch der Spülmaschine 1 reduziert werden kann.

Die andere (zweite) der beiden Transportspülmaschinen 1' weist ebenfalls eine Transportvorrichtung (Hauptförderband 2') zum Transportieren von Spülgut 9c in einer Transportrichtung durch die Transportspülmaschine 1' auf. Die Transportvorrichtung dieser Transportspülmaschine 1' ist dabei insbesondere ausgebildet, nur eine Spülgutart in den Behandlungszonen der Transportspülmaschine 1' behandeln zu lassen, obgleich dies nicht als Einschränkung der Erfindung anzusehen ist.

Die hierin berücksichtigten Transportspülmaschinen 1, 1' weisen jeweils mindestens eine Waschzone, wie beispielsweise eine Vorwaschzone und eine Hauptwaschzone, welche in der Transportrichtung des Spülguts 9a, 9b, 9c gesehen nach der Vorwaschzone angeordnet ist, auf. In Transportrichtung gesehen ist nach der mindestens einen Waschzone vorzugsweise eine Nachwaschzone und nach der Nachwaschzone mindestens eine Klarspülzone, wie beispielsweise eine Frischwasser-Klarspülzone und/oder eine Pumpen-Klarspülzone vorgesehen. In Transportrichtung des Spülguts 9a, 9b, 9c gesehen schließt sich an der mindestens einen Klarspülzone eine Trocknungszone an.

Die jeweiligen Zonen der Transportspülmaschinen 1, 1' können über Trennvorhänge voneinander getrennt sein. Auch ist es denkbar, wenn die jeweiligen Einlauftunnel der Transportspülmaschinen 1, 1', welche in Transportrichtung gesehen nach dem entsprechenden Beladebereich der Transportspülmaschine 1, 1' vorgesehen ist, über einen Trennvorhang von dem Einlauf der Transportspülmaschine 1, 1' getrennt. Durch das Vorsehen von Trennvorhängen kann ein Überspritzen von Waschflüssigkeit und Klarspülflüssigkeit und der Austritt von Wrasen aus der Transportspülmaschine 1, 1' verhindert werden.

Den Behandlungszonen der Transportspülmaschinen 1, 1' sind Sprühdüsen zugeordnet. Diese Sprühdüsen dienen dazu, Flüssigkeit auf das zu behandelnde Spülgut 9a, 9b, 9c zu sprühen, wenn dieses von der Transportvorrichtung durch die jeweiligen Behandlungszonen transportiert wird. Die einzelnen Sprühsysteme der Behandlungszone gewährleisten, dass das zu behandelnde Spülgut 9a, 9b, 9c sowohl von der Oberseite als auch der Unterseite abgespritzt wird.

Am Beladebereich der Transportspülmaschinen 1, 1' ist bei der in FIG. 1 schematisch dargestellten Ausführungsform ein System 10 zum Beladen der Transportspülmaschine 1 vorgesehen. Das Beladesystem 10 weist ein zugeordnetes Zufuhrförderband 11 auf, über welches Spülgut 9a, 9b, 9c den Beladebereichen der Transportspülmaschinen 1, 1' zuführbar ist.

Das erfindungsgemäße Beladesystem 10, welches gemäß einer exemplarischen Ausführungsform schematisch in FIG. 1 in einer Draufsicht gezeigt ist, weist ferner eine Beladeanordnung mit mindestens zwei Manipulatoren 12a, 12b auf, um automatisch die Transportspülmaschinen 1 und im Einzelnen entsprechende Spuren oder Bereiche der Transportbänder der Transportspülmaschinen 1, 1' mit Spülgut 9a, 9b, 9c insbesondere einer der vorab festgelegten oder festlegbaren Spülgutgruppen zu beladen.

Bei der in FIG. 1 schematisch dargestellten Lösung ist insbesondere eine weitere erste Beladeanordnung vorgesehen, welche ausgebildet ist, die erste Transportspülmaschine 1 und im Einzelnen eine parallel zu einem Haupttransportband 2 der ersten Transportspülmaschine 1 verlaufende Besteckspur 3 mit Spülgut 9a der ersten Spülgutgruppe (d.h. mit aus einem Metall, insbesondere Edelstahl gefertigtem Besteck und/oder Besteckteilen) automatisch zu beladen.

Ferner ist es denkbar, dass eine weitere zweite Beladeanordnung zum Einsatz, welche ausgebildet ist, die erste Transportspülmaschine 1 und im Einzelnen eine parallel zu dem Haupttransportband 2 der ersten Transportspülmaschine 1 verlaufende Tablettspur mit Spülgut 9b der zweiten Spülgutgruppe (d.h. mit aus einem Kunststoffmaterial gefertigten Tabletts und tablettartigen Gegenständen) automatisch zu beladen.

Zusätzlich hierzu kommt bei der in FIG. 1 gezeigten exemplarischen Ausführungsform die Beladeanordnung mit den bereits erwähnten zwei Manipulatoren 12a, 12b zum Einsatz, welche ausgebildet ist, die zweite Transportspülmaschine 1' und im Einzelnen das Haupttransportband 2 der zweiten Transportspülmaschine 1' mit Spülgut 9c der dritten Spülgutgruppe (d.h. mit aus Porzellan oder einem porzellanartigen Material gefertigten Geschirrteilen) automatisch zu beladen.

Dabei ist beispielsweise vorgesehen, dass - in Transportrichtung des Zufuhrförderbandes 11 gesehen - die Beladeanordnung mit den beiden Manipulatoren 12a, 12b stromaufwärts der ersten und zweiten weiteren Beladeanordnung angeordnet ist.

Bei der in FIG. 1 gezeigten exemplarischen Ausführungsform weist die Beladeanordnung die beiden bereits erwähnten Manipulatoren 12a, 12b auf, welche jeweils ausgebildet sind, insbesondere Spülgutteile 9c der dritten Spülgutgruppe zu greifen, von dem Zufuhrförderband 11 abzunehmen und an einer vorab festgelegten oder festlegbaren dedizierten Position abzulegen.

Bei dieser vorab festgelegten oder festlegbaren dedizierten Position handelt es sich um eine Position in einem Bereich des Transportbandes (Förderbandes 2') der zweiten Transportspülmaschine 1', insbesondere in einem Bereich des Hauptförderbandes 2' der zweiten Transportspülmaschine 1'.

Alternativ hierzu ist es aber auch grundsätzlich denkbar, dass die vorab festgelegte oder festlegbare dedizierte Position in einem Bereich liegt, der sich vorzugsweise außerhalb der zweiten Transportspülmaschine 1' befindet und als Stellfläche zum Ausbilden eines Geschirrstapels dient.

Wie es der Draufsicht in FIG. 1 entnommen werden kann, ist bei der exemplarischen Ausführungsform des erfindungsgemäßen Beladesystems 10 beispielsweise vorgesehen, dass die beiden Manipulatoren 12a, 12b jeweils ein Greifersystem mit mindestens einer Greifzange aufweisen.

Alternativ oder zusätzlich zu einer Greifzange wäre es aber auch denkbar, wenn die Greifersysteme mindestens einen Sauggreifer aufweist.

Grundsätzlich ist es von Vorteil, dass mindestens ein Manipulator 12a, 12b der Beladeanordnung ausgebildet ist, mit dem Greifersystem insbesondere Spülgut 9c der dritten Spülgutgruppe zu greifen, von dem Zufuhrförderband 11 abzunehmen und an der vorab festgelegten oder festlegbaren dedizierten Position abzulegen.

In diesem Zusammenhang ist es beispielsweise denkbar, dass der mindestens eine Manipulator 12a, 12b der Beladeanordnung eine Ausgangsstellung oder Warteposition aufweist, in welcher das Greifersystem des Manipulators 12a, 12b derart oberhalb des Zufuhrförderbandes 11 angeordnet ist, dass Spülgutteile 9c der dritten Spülgutgruppe bei deren Transport mit dem Zufuhrförderband 11 in den Greifbereich der mindestens einen Greifzange gefördert werden.

In vorteilhafter Weise ist dem Greifersystem des mindestens einen Manipulators 12a, 12b der Beladeanordnung eine Sensorik zugeordnet, welche ausgebildet ist, zu erfassen, wenn sich mindestens ein Spülgutteil 9a, 9b, 9c und insbesondere mindestens ein Spülgutteil 9c der dritten Spülgutgruppe in dem Greifbereich der mindestens einen Greifzange befindet.

Dem Beladesystem 10 ist vorzugsweise eine Steuereinrichtung zugeordnet, welche ausgebildet ist, ein Greifen der mindestens einen Greifzange zu initiieren, wenn die dem Greifersystem zugeordnete Sensorik erfasst, dass sich mindestens ein Spülgutteil 9a, 9b, 9c und insbesondere mindestens ein Spülgutteil 9c der dritten Spülgutgruppe in dem Greifbereich der mindestens einen Greifzange befindet.

Gemäß vorteilhaften Realisierungen ist die Steuereinrichtung vorzugsweise ferner ausgebildet, den mindestens einen Manipulator 12a, 12b der Beladeanordnung derart anzusteuern, dass dieser das mindestens eine von dem Greifersystem gegriffene mindestens eine Spülgutteil von dem Zufuhrförderband 11 abnimmt und an einer vorab festgelegten oder festlegbaren dedizierten Position ablegt.

Grundsätzlich bietet es sich an, dass insbesondere dem Greifersystem des mindestens einen Manipulators 12a, 12b eine Positionierhilfe zugeordnet ist, welche mindestens ein Führungselement aufweist, wobei das mindestens eine Führungselement ausgebildet ist, vorzugsweise nur Spülgut 9c der dritten Spülgutgruppe, welches über das Zufuhrförderband 11 zugeführt wird, in Richtung des Greifbereichs der mindestens einen Greifzange des Greifersystems zu lenken.

Die exemplarische Ausführungsform des Beladesystems 10 gemäß FIG. 1 weist ferner ein insbesondere optisches Erfassungssystem 15 auf, welches ausgebildet ist, beim Zuführen der Spülgutteile zu dem mindestens einen Beladebereich der mindestens einen Transportspülmaschine mindestens einen der nachfolgenden Parameter der Spülgutteile 9a, 9b, 9c auf dem Zufuhrförderband 11 zu erfassen:
i) eine Art der Spülgutteile 9a, 9b, 9c und/oder eine relative Position der Spülgutteile 9a, 9b, 9c auf dem Zufuhrförderband 11;
ii) einen Verschmutzungsgrad der Spülgutteile 9a, 9b, 9c; und/oder
iii) eine Ordnung der Spülgutteile 9a, 9b, 9c und/oder eine relative Ausrichtung der Spülgutteile 9a, 9b, 9c zu dem Zufuhrförderband 11.

Dem Erfassungssystem 15 ist eine Auswerteeinrichtung zugeordnet, welche ausgebildet ist, in Abhängigkeit von mindestens einem mit Hilfe des Erfassungssystems 15 erfassten Parameter die Zuführung der Spülgutteile 9a, 9b, 9c zu dem mindestens einen Beladebereich der Transportspülmaschinen 1, 1' zu steuern und/oder den mindestens einen Manipulator 12a, 12b der Beladeanordnung anzusteuern.

Insbesondere ist dabei das Erfassungssystem 15 ausgebildet, beim Zuführen der Spülgutteile 9a, 9b, 9c zu dem mindestens einen Beladebereich der mindestens einen Transportspülmaschine 1, 1' insbesondere anhand der Größe, der Formgebung und/oder anhand des Materials der Spülgutteile 9a, 9b, 9c mindestens eine Spülgutart der nachfolgend aufgeführten Spülgutarten zu erfassen:
- eine erste Spülgutart, welche aus einem Metall, insbesondere Edelstahl, gefertigtes Besteck und/oder Besteckteile umfasst;
- eine zweite Spülgutart, welche aus einem Metall, insbesondere Edelstahl, gefertigte Behälter, insbesondere GN-Behälter und/oder Töpfe umfasst;
- eine dritte Spülgutart, welche aus einem Kunststoffmaterial gefertigte Tabletts oder tablettartige Gegenstände umfasst;
- eine vierte Spülgutart, welche aus Porzellan, einem porzellanartigen Material oder aus Steingut gefertigte Geschirrteile, insbesondere Teller, Tassen und/oder Schälchen erfasst; und/oder
- eine fünfte Spülgutart, welche aus Glas oder einem glasartigen Material gefertigte Geschirrteile und/oder Gläser, insbesondere Trinkgläser, umfasst.

Hierbei ist die Auswerteeinrichtung insbesondere ausgebildet, in Abhängigkeit von einer erfassten Spülgutart den mindestens einen Manipulator 12a, 12b der Beladeanordnung derart anzusteuern, dass das Spülgutteil der erfassten Spülgutart von dem mindestens einen Manipulator 12a, 12b von dem Zufuhrförderband 11 abgenommen und auf einer insbesondere der erfassten Spülgutart zugeordneten Transportspur 2, 2', 3 der mindestens einen Transportspülmaschine 1, 1' platziert wird.

Alternativ oder zusätzlich hierzu ist die Auswerteeinrichtung ausgebildet, eine Zuführung eines Spülgutteils zu der Beladeanordnung zu unterbrechen oder nicht zuzulassen (d.h. beispielsweise das Zufuhrförderband 11 anzuhalten), wenn mit dem Erfassungssystem 15 erfasst wird, dass das Spülgutteil nicht zu einer vorab festgelegten oder festlegbaren Spülgutart gehört oder wenn mit dem Erfassungssystem 15 das Spülgutteil nicht einer vorab festgelegten oder festlegbaren Spülgutart zuordenbar ist.

Ferner ist das Erfassungssystem 15 ausgebildet beim Zuführen der Spülgutteile 9a, 9b, 9c zu dem mindestens einen Beladebereich der mindestens einen Transportspülmaschine 1, 1' einen Verschmutzungsgrad der Spülgutteile 9a, 9b, 9c zu erfassen, wobei die Auswerteeinrichtung ausgebildet ist, in Abhängigkeit von dem erfassten Verschmutzungsgrad die Zuführung der Spülgutteile 9a, 9b, 9c zu der Beladeanordnung zuzulassen oder zu unterbrechen.

Zusätzlich hierzu ist die Auswerteeinrichtung ausgebildet, in Abhängigkeit von dem erfassten Verschmutzungsgrad den mindestens einen Manipulator 12a, 12b der Beladeanordnung derart anzusteuern, dass die Spülgutteile 9a, 9b, 9c von dem mindestens einen Manipulator 12a, 12b von dem Zufuhrförderband 11 abgenommen und - in Abhängigkeit von dem erfassten Verschmutzungsgrad - entweder auf einer Transportspur 2, 2', 3 der mindestens einen Transportspülmaschine 1, 1' oder in einen Ablagebereich extern der mindestens einen Transportspülmaschine 1, 1' und insbesondere bei einer Vorabräumstation platziert werden.

Denkbar ist es beispielsweise, dass das Erfassungssystem 15 ausgebildet ist, beim Zuführen der Spülgutteile 9a, 9b, 9c zu dem mindestens einen Beladebereich der mindestens einen Transportspülmaschine 1, 1' einen Verschmutzungsgrad der Spülgutteile 9a, 9b, 9c zu erfassen, wobei die Auswerteeinrichtung ausgebildet ist, in Abhängigkeit von dem erfassten Verschmutzungsgrad die Zuführung der Spülgutteile 9a, 9b, 9c zu der Beladeanordnung zuzulassen oder zu unterbrechen, wobei die Auswerteeinrichtung ferner ausgebildet ist, die Zuführung eines Spülgutteils zu der Beladeanordnung zu unterbrechen, wenn bei dem Spülgutteil ein Verschmutzungsgrad erfasst wird, der einen vorab festgelegten Schwellwert überschreitet.

Wie bereits angedeutet und in FIG. 1 gezeigt, ist das Zufuhrförderband 11 insbesondere ausgebildet, die Spülgutteile 9a, 9b, 9c chargenweise dem mindestens einen Beladebereich der mindestens einen Transportspülmaschine 1, 1' zuzuführen, wobei jede Charge vorzugsweise ein Tablett 9b mit gegebenenfalls auf dem Tablett 9b abgestellten oder abgelegten Spülgutteilen insbesondere von mindestens einem Gedecksatz umfasst.

Dabei ist das Erfassungssystem 15 insbesondere ausgebildet, je Charge den mindestens einen Parameter der Spülgutteile 9a, 9b, 9c zu erfassen, wobei die Auswerteeinrichtung ausgebildet ist, in Abhängigkeit von dem erfassten Parameter einer Charge die Zuführung der Charge zu der Beladeanordnung zuzulassen oder zu unterbrechen.

Alternativ oder zusätzlich hierzu ist das Erfassungssystem 15 ausgebildet, beim chargenweisen Zuführen der Spülgutteile 9a, 9b, 9c zu dem mindestens einen Beladebereich der mindestens einen Transportspülmaschine 1, 1' eine Ordnung der Spülgutteile 9a, 9b, 9c je Charge zu erfassen, wobei die Auswerteeinrichtung ausgebildet ist, in Abhängigkeit von der erfassten Ordnung die Zuführung der Charge der Spülgutteile 9a, 9b, 9c zu der Beladeanordnung zuzulassen, wobei die Auswerteeinrichtung vorzugsweise insbesondere ausgebildet ist, die Zuführung der Charge der Spülgutteile 9a, 9b, 9c zu der Beladeanordnung zuzulassen, wenn mit dem Erfassungssystem 15 erfasst wird, dass in der Charge die Spülgutteile 9a, 9b, 9c vereinzelt vorliegen.

Insbesondere ist die Auswerteeinrichtung ausgebildet, die Zuführung der Charge der der Spülgutteile 9a, 9b, 9c zu der Beladeanordnung nicht zuzulassen bzw. zu unterbrechen, wenn mit dem Erfassungssystem 15 erfasst wird, dass in der Charge eine vorab festgelegte oder festlegbare Anzahl an Spülgutteilen in einer zumindest bereichsweise überlappenden Weise vorliegt.

Auch ist es denkbar, dass das Erfassungssystem 15 ausgebildet ist, beim Zuführen der Spülgutteile 9a, 9b, 9c zu dem mindestens einen Beladebereich der mindestens einen Transportspülmaschine 1, 1' eine relative Ausrichtung mindestens eines der Spülgutteile 9a, 9b, 9c zu dem Zufuhrförderband 11 zu erfassen, wobei die Auswerteeinrichtung ausgebildet ist, in Abhängigkeit von der erfassten Ausrichtung des mindestens einen Spülgutteils zu dem Zufuhrförderband 11 die Zuführung zumindest des mindestens einen Spülgutteils zu der Beladeanordnung zuzulassen oder zu unterbrechen, wobei die Auswerteeinrichtung insbesondere ausgebildet ist, die Zuführung zu der Beladeanordnung nicht zuzulassen bzw. zu unterbrechen, wenn mit dem Erfassungssystem 15 erfasst wird, dass das mindestens eine Spülgutteil von mindestens einer vorab festgelegten oder festlegbaren Soll-Ausrichtung abweicht.

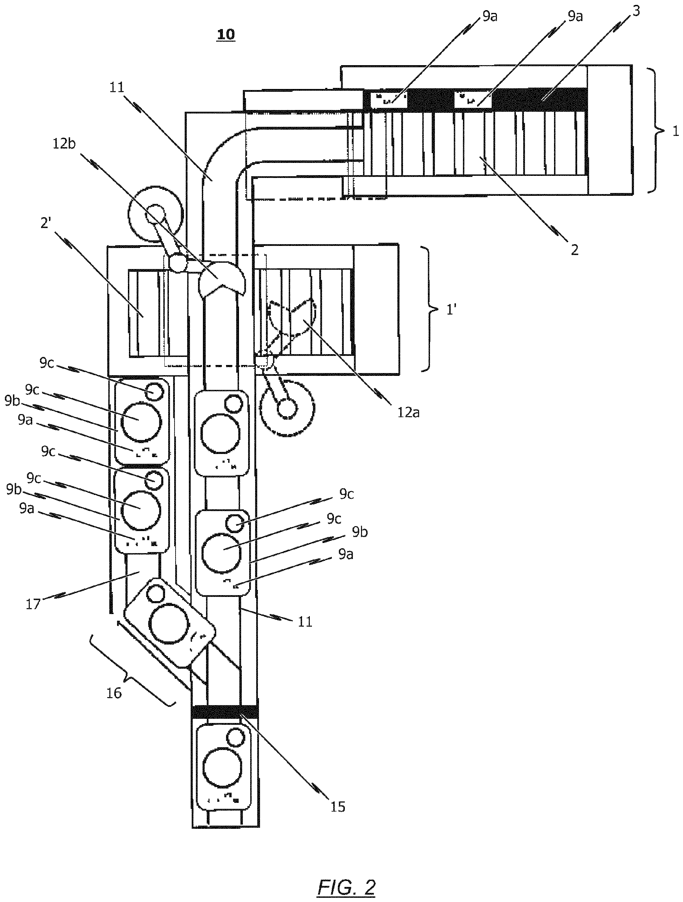

FIG. 2 zeigt schematisch und in einer Draufsicht die Beladebereiche einer zwei Transportspülmaschinen 1, 1' umfassenden Transportspülmaschinenanordnung mit einer zweiten exemplarischen Ausführungsform des erfindungsgemäßen Beladesystems 10.

Die zweite Ausführungsform des exemplarischen Beladesystems 10 gemäß FIG. 2 unterscheidet sich von der ersten Ausführungsform gemäß FIG. 1 insbesondere dadurch, dass bei der zweiten Ausführungsform dem Zufuhrförderband 11 eine Ausschleusweiche 16 zugeordnet ist, die vorzugsweise stromaufwärts des mindestens einen Beladebereichs der mindestens einen Transportspülmaschine 1, 1' und stromabwärts des Erfassungssystems 15 angeordnet ist, und die ausgebildet ist, bedarfsweise mindestens ein Spülgutteil und insbesondere chargenweise Spülgutteile 9a, 9b, 9c aus dem Zufuhrförderband 11 auszuschleusen.

Dabei ist die Auswerteeinrichtung ausgebildet ist, die Ausschleusweiche 16 zu aktivieren, wenn eine Zuführung mindestens eines Spülgutteils zu der Beladeanordnung nicht zulässig ist bzw. zu unterbrechen ist.

Insbesondere ist die Ausschleusweiche 16 ausgebildet, bedarfsweise mindestens ein Spülgutteil und insbesondere chargenweise Spülgutteile 9a, 9b, 9c aus dem Zufuhrförderband 11 in einen Auslaufbereich 17 auszuschleusen, wobei der Auslaufbereich 17 vorzugsweise zur insbesondere manuellen Vorabräumung der in den Auslaufbereich 17 ausgeschleusten Spülgutteile 9a, 9b, 9c ausgebildet ist.

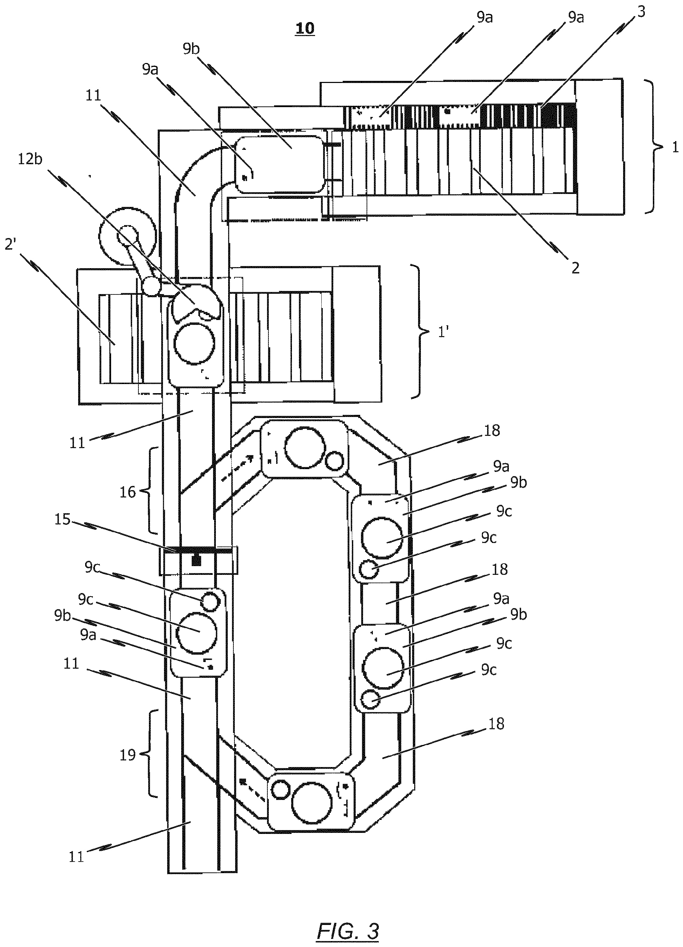

FIG. 3 zeigt schematisch und in einer Draufsicht die Beladebereiche einer zwei Transportspülmaschinen 1, 1' umfassenden Transportspülmaschinenanordnung mit einer dritten exemplarischen Ausführungsform des erfindungsgemäßen Beladesystems 10.

Die dritte Ausführungsform des exemplarischen Beladesystems 10 gemäß FIG. 3 unterscheidet sich von der zweiten Ausführungsform gemäß FIG. 2 insbesondere dadurch, dass die Ausschleusweiche 16 ausgebildet ist, bedarfsweise mindestens ein Spülgutteil und insbesondere chargenweise Spülgutteile 9a, 9b, 9c aus dem Zufuhrförderband 11 in ein Rückführförderband 18 auszuschleusen, wobei das Rückführförderband 18 zumindest bereichsweise zur insbesondere manuellen Vorabräumung des mindestens einen in das Rückführförderband 18 ausgeschleusten Spülgutteils ausgebildet ist.

Ein stromaufwärtiger Endbereich des Rückführförderbands 18 ist bei der in FIG. 3 gezeigten Ausführungsform fördermäßig mit einer Einschleusweiche 19 verbunden zum zumindest bedarfsweisen Einschleusen des mindestens einen vorabgeräumten Spülgutteils in das Zufuhrförderband 11, wobei die Einschleusweiche 19 vorzugsweise stromaufwärts des Erfassungssystems 15 in das Zufuhrförderband 11 mündet.

Grundsätzlich ist es bei der ersten Ausführungsform des erfindungsgemäßen Beladesystems 10 auch denkbar, dass dem Zufuhrförderband 11 eine Einschleusweiche 19 zugeordnet ist, die ausgebildet ist, bedarfsweise mindestens ein Spülgutteil und insbesondere chargenweise Spülgutteile 9a, 9b, 9c in das Zufuhrförderband 11 einzuschleusen, wobei die Einschleusweiche 19 vorzugsweise stromaufwärts des Erfassungssystems 15 in das Zufuhrförderband 11 mündet, und wobei vorzugsweise die Einschleusweiche 19 einen insbesondere zur manuellen Vorabräumung ausgebildeten Bereich mit dem Zufuhrförderband 11 fördermäßig verbindet.

Die Erfindung ist nicht auf die in den Zeichnungen gezeigten Ausführungsformen beschränkt, sondern ergibt sich aus einer Zusammenschau sämtlicher hierin offenbarter Merkmale.

Insbesondere ist es in diesem Zusammenhang denkbar, dass - in Förderrichtung des Zufuhrförderbandes gesehen - stromaufwärts des Erfassungssystems 15 beispielsweise mit Hilfe eines ansteuerbaren Magneten Besteckteile von dem über das Zufuhrförderband 11 zugeführten Spülgut abgenommen werden, wobei dann die abgenommenen Besteckteile vorzugsweise automatisch in eine Besteckspur einer Transportspülmaschine 1, 1' eingebracht werden.

Darüber hinaus ist gemäß Weiterbildungen die Auswerteeinrichtung ausgebildet, anhand der von dem Erfassungssystem 15 erfassten Spülgutart, die Manipulatoren der Beladeanordnung entsprechend zu koordinieren, damit von dem geeigneten Manipulator 12a, 12b die entsprechende Spülgutart von dem Zufuhrförderband 11 abgenommen werden kann.

## Patentansprüche

1. System (10) zum Beladen mindestens einer Transportspülmaschine (1, 1') mit Spülgutteilen (9a, 9b, 9c), wobei das System (10) Folgendes aufweist:
- ein Zufuhrförderband (11) zum Zuführen von Spülgutteilen (9a, 9b, 9c) zu mindestens einem Beladebereich der mindestens einen Transportspülmaschine (1, 1');
- eine Beladeanordnung mit mindestens einem Manipulator (12a, 12b), welcher ausgebildet ist, automatisch Spülgutteile (9a, 9b, 9c) von dem Zufuhrförderband (11) abzunehmen und auf mindestens einer Transportspur (2, 2', 3) der mindestens einen Transportspülmaschine (1, 1') zu platzieren; und
- ein insbesondere optisches Erfassungssystem (15), welches ausgebildet ist, beim Zuführen der Spülgutteile (9a, 9b, 9c) zu dem mindestens einen Beladebereich der mindestens einen Transportspülmaschine (1, 1') mindestens einen der nachfolgenden Parameter der Spülgutteile (9a, 9b, 9c) auf dem Zufuhrförderband (11) zu erfassen:
i) eine Art der Spülgutteile (9a, 9b, 9c) und/oder eine relative Position der Spülgutteile (9a, 9b, 9c) auf dem Zufuhrförderband (11);
ii) einen Verschmutzungsgrad der Spülgutteile (9a, 9b, 9c); und/oder
iii) eine Ordnung der Spülgutteile (9a, 9b, 9c) und/oder eine relative Ausrichtung der Spülgutteile (9a, 9b, 9c) zu dem Zufuhrförderband (11),
wobei dem Erfassungssystem (15) eine Auswerteeinrichtung zugeordnet ist, welche ausgebildet ist, in Abhängigkeit von mindestens einem mit Hilfe des Erfassungssystems (15) erfassten Parameter die Zuführung der Spülgutteile (9a, 9b, 9c) zu dem mindestens einen Beladebereich zu steuern und/oder den mindestens einen Manipulator (12a, 12b) der Beladeanordnung anzusteuern, wobei
das Erfassungssystem (15) ausgebildet ist, beim Zuführen der Spülgutteile (9a, 9b, 9c) zu dem mindestens einen Beladebereich der mindestens einen Transportspülmaschine (1, 1') die Art der Spülgutteile (9a, 9b, 9c) zu erfassen, **dadurch gekennzeichnet, dass** die Auswerteeinrichtung ausgebildet ist, eine Zuführung mindestens eines Spülgutteils (9a, 9b, 9c) zu der Beladeanordnung zu unterbrechen oder nicht zuzulassen, wenn mit dem Erfassungssystem (15) erfasst wird, dass das mindestens eine Spülgutteil (9a, 9b, 9c) nicht zu einer vorab festgelegten oder festlegbaren Spülgutart gehört oder wenn mit dem Erfassungssystem (15) das Spülgutteil (9a, 9b, 9c) nicht einer vorab festgelegten oder festlegbaren Spülgutart zuordenbar ist.

2. System (10) nach Anspruch 1,
wobei das Erfassungssystem (15) ausgebildet ist, beim Zuführen der Spülgutteile (9a, 9b, 9c) zu dem mindestens einen Beladebereich der mindestens einen Transportspülmaschine (1, 1') insbesondere anhand der Größe, der Formgebung und/oder anhand des Materials der Spülgutteile (9a, 9b, 9c) mindestens eine Spülgutart der nachfolgend aufgeführten Spülgutarten zu erfassen:
- eine erste Spülgutart, welche aus einem Metall, insbesondere Edelstahl, gefertigtes Besteck und/oder Besteckteile umfasst;
- eine zweite Spülgutart, welche aus einem Metall, insbesondere Edelstahl, gefertigte Behälter, insbesondere GN-Behälter und/oder Töpfe umfasst;
- eine dritte Spülgutart, welche aus einem Kunststoffmaterial gefertigte Tabletts oder tablettartige Gegenstände umfasst;
- eine vierte Spülgutart, welche aus Porzellan, einem porzellanartigen Material oder aus Steingut gefertigte Geschirrteile, insbesondere Teller, Tassen und/oder Schälchen erfasst; und/oder
- eine fünfte Spülgutart, welche aus Glas oder einem glasartigen Material gefertigte Geschirrteile und/oder Gläser, insbesondere Trinkgläser, umfasst,
wobei die Auswerteeinrichtung insbesondere ausgebildet ist, in Abhängigkeit von einer erfassten Spülgutart den mindestens einen Manipulator (12a, 12b) der Beladeanordnung derart anzusteuern, dass das Spülgutteil der erfassten Spülgutart von dem mindestens einen Manipulator (12a, 12b) von dem Zufuhrförderband (11) abgenommen und auf einer insbesondere der erfassten Spülgutart zugeordneten Transportspur (2, 2', 3) der mindestens einen Transportspülmaschine (1, 1') platziert wird.

3. System (10) nach Anspruch 1 oder 2 oder nach dem Oberbegriff von Anspruch 1,
**dadurch gekennzeichnet, dass**
das Erfassungssystem (15) ausgebildet ist, beim Zuführen der Spülgutteile (9a, 9b, 9c) zu dem mindestens einen Beladebereich der mindestens einen Transportspülmaschine (1, 1') einen Verschmutzungsgrad der Spülgutteile (9a, 9b, 9c) zu erfassen, wobei die Auswerteeinrichtung ausgebildet ist, in Abhängigkeit von dem erfassten Verschmutzungsgrad die Zuführung der Spülgutteile (9a, 9b, 9c) zu der Beladeanordnung zuzulassen oder zu unterbrechen, und/oder wobei die Auswerteeinrichtung ausgebildet ist, in Abhängigkeit von dem erfassten Verschmutzungsgrad den mindestens einen Manipulator (12a, 12b) der Beladeanordnung derart anzusteuern, dass die Spülgutteile (9a, 9b, 9c) von dem mindestens einen Manipulator (12a, 12b) von dem Zufuhrförderband (11) abgenommen und - in Abhängigkeit von dem erfassten Verschmutzungsgrad - entweder auf einer Transportspur (2, 2', 3) der mindestens einen Transportspülmaschine (1, 1') oder in einen Ablagebereich extern der mindestens einen Transportspülmaschine (1, 1') und insbesondere bei einer Vorabräumstation platziert werden.

4. System (10) nach Anspruch 3,
wobei das Erfassungssystem (15) ausgebildet ist, beim Zuführen der Spülgutteile (9a, 9b, 9c) zu dem mindestens einen Beladebereich der mindestens einen Transportspülmaschine (1, 1') einen Verschmutzungsgrad der Spülgutteile (9a, 9b, 9c) zu erfassen, wobei die Auswerteeinrichtung ausgebildet ist, in Abhängigkeit von dem erfassten Verschmutzungsgrad die Zuführung der Spülgutteile (9a, 9b, 9c) zu der Beladeanordnung zuzulassen oder zu unterbrechen, wobei die Auswerteeinrichtung ferner ausgebildet ist, die Zuführung mindestens eines Spülgutteils (9a, 9b, 9c) zu der Beladeanordnung zu unterbrechen, wenn bei dem Spülgutteil (9a, 9b, 9c) ein Verschmutzungsgrad erfasst wird, der einen vorab festgelegten Schwellwert überschreitet.

5. System (10) nach Anspruch 3 oder 4,
wobei das Zufuhrförderband (11) ausgebildet ist, die Spülgutteile (9a, 9b, 9c) chargenweise dem mindestens einen Beladebereich der mindestens einen Transportspülmaschine (1, 1') zuzuführen, wobei jede Charge vorzugsweise ein Tablett (9b) mit gegebenenfalls auf dem Tablett (9b) abgestellten oder abgelegten Spülgutteilen (9a, 9c) insbesondere von mindestens einem Gedecksatz umfasst, wobei das Erfassungssystem (15) insbesondere ausgebildet ist, je Charge den mindestens einen Parameter der Spülgutteile (9a, 9b, 9c) zu erfassen, und wobei die Auswerteeinrichtung ausgebildet ist, in Abhängigkeit von dem erfassten Parameter einer Charge die Zuführung der Charge zu der Beladeanordnung zuzulassen oder zu unterbrechen.

6. System (10) nach einem der Ansprüche 1 bis 5,
wobei das Zufuhrförderband (11) ausgebildet ist, die Spülgutteile (9a, 9b, 9c) chargenweise dem mindestens einen Beladebereich der mindestens einen Transportspülmaschine (1, 1') zuzuführen, wobei jede Charge vorzugsweise ein Tablett (9b) mit gegebenenfalls auf dem Tablett (9b) abgestellten oder abgelegten Spülgutteilen (9a, 9c) insbesondere von mindestens einem Gedecksatz umfasst, wobei das Erfassungssystem (15) ausgebildet ist, beim chargenweisen Zuführen der Spülgutteile (9a, 9b, 9c) zu dem mindestens einen Beladebereich der mindestens einen Transportspülmaschine (1, 1') eine Ordnung der Spülgutteile (9a, 9b, 9c) je Charge zu erfassen, wobei die Auswerteeinrichtung ausgebildet ist, in Abhängigkeit von der erfassten Ordnung die Zuführung der Charge der Spülgutteile (9a, 9b, 9c) zu der Beladeanordnung zuzulassen, wobei die Auswerteeinrichtung vorzugsweise insbesondere ausgebildet ist, die Zuführung der Charge der Spülgutteile (9a, 9b, 9c) zu der Beladeanordnung zuzulassen, wenn mit dem Erfassungssystem (15) erfasst wird, dass in der Charge die Spülgutteile (9a, 9b, 9c) vereinzelt vorliegen.

7. System (10) nach Anspruch 6,
wobei die Auswerteeinrichtung ausgebildet ist, die Zuführung der Charge der der Spülgutteile (9a, 9b, 9c) zu der Beladeanordnung nicht zuzulassen bzw. zu unterbrechen, wenn mit dem Erfassungssystem (15) erfasst wird, dass in der Charge eine vorab festgelegte oder festlegbare Anzahl an Spülgutteilen (9a, 9b, 9c) in einer zumindest bereichsweise überlappenden Weise vorliegt.

8. System (10) nach einem der Ansprüche 1 bis 7,
wobei das Erfassungssystem (15) ausgebildet ist, beim Zuführen der Spülgutteile (9a, 9b, 9c) zu dem mindestens einen Beladebereich der mindestens einen Transportspülmaschine (1, 1') eine relative Ausrichtung mindestens eines der Spülgutteile (9a, 9b, 9c) zu dem Zufuhrförderband (11) zu erfassen, wobei die Auswerteeinrichtung ausgebildet ist, in Abhängigkeit von der erfassten Ausrichtung des mindestens einen Spülgutteils (9a, 9b, 9c) zu dem Zufuhrförderband (11) die Zuführung zumindest des mindestens einen Spülgutteils (9a, 9b, 9c) zu der Beladeanordnung zuzulassen oder zu unterbrechen, wobei die Auswerteeinrichtung insbesondere ausgebildet ist, die Zuführung zu der Beladeanordnung nicht zuzulassen bzw. zu unterbrechen, wenn mit dem Erfassungssystem (15) erfasst wird, dass das mindestens eine Spülgutteil (9a, 9b, 9c) von mindestens einer vorab festgelegten oder festlegbaren Soll-Ausrichtung abweicht.

9. System (10) nach einem der Ansprüche 1 bis 8,
wobei dem Zufuhrförderband (11) eine Ausschleusweiche (16) zugeordnet ist, die vorzugsweise stromaufwärts des mindestens einen Beladebereichs der mindestens einen Transportspülmaschine (1, 1') und stromabwärts des Erfassungssystems (15) angeordnet ist, und die ausgebildet ist, bedarfsweise mindestens ein Spülgutteil (9a, 9b, 9c) und insbesondere chargenweise Spülgutteile (9a, 9b, 9c) aus dem Zufuhrförderband (11) auszuschleusen, wobei die Auswerteeinrichtung ausgebildet ist, die Ausschleusweiche (16) zu aktivieren, wenn eine Zuführung mindestens eines Spülgutteils (9a, 9b, 9c) zu der Beladeanordnung nicht zulässig ist bzw. zu unterbrechen ist.

10. System (10) nach Anspruch 9,
wobei die Ausschleusweiche (16) ausgebildet ist, bedarfsweise mindestens ein Spülgutteil (9a, 9b, 9c) und insbesondere chargenweise Spülgutteile (9a, 9b, 9c) aus dem Zufuhrförderband (11) in einen Auslaufbereich (17) auszuschleusen, wobei der Auslaufbereich (17) vorzugsweise zur insbesondere manuellen Vorabräumung der in den Auslaufbereich (17) ausgeschleusten Spülgutteile (9a, 9b, 9c) ausgebildet ist.

11. System (10) nach Anspruch 9 oder 10,
wobei die Ausschleusweiche (16) ausgebildet ist, bedarfsweise mindestens ein Spülgutteil (9a, 9b, 9c) und insbesondere chargenweise Spülgutteile (9a, 9b, 9c) aus dem Zufuhrförderband (11) in ein Rückführförderband (18) auszuschleusen, wobei das Rückführförderband (18) zumindest bereichsweise zur insbesondere manuellen Vorabräumung des mindestens einen in das Rückführförderband (18) ausgeschleusten Spülgutteils (9a, 9b, 9c) ausgebildet ist, und wobei ein stromaufwärtiger Endbereich des Rückführförderbands (18) fördermäßig mit einer Einschleusweiche (19) verbunden ist zum zumindest bedarfsweisen Einschleusen des mindestens einen vorabgeräumten Spülgutteils (9a, 9b, 9c) in das Zufuhrförderband (11), wobei die Einschleusweiche (19) vorzugsweise stromaufwärts des Erfassungssystems (15) in das Zufuhrförderband (11) mündet.

12. System (10) nach einem der Ansprüche 1 bis 11,
wobei dem Zufuhrförderband (11) eine Einschleusweiche (19) zugeordnet ist, die ausgebildet ist, bedarfsweise mindestens ein Spülgutteil (9a, 9b, 9c) und insbesondere chargenweise Spülgutteile (9a, 9b, 9c) in das Zufuhrförderband (11) einzuschleusen, wobei die Einschleusweiche (19) vorzugsweise stromaufwärts des Erfassungssystems (15) in das Zufuhrförderband (11) mündet, und wobei vorzugsweise die Einschleusweiche (19) einen insbesondere zur manuellen Vorabräumung ausgebildeten Bereich mit dem Zufuhrförderband (11) fördermäßig verbindet.

13. Anordnung aus mindestens einer Transportspülmaschine (1, 1') und einem Beladesystem nach einem der Ansprüche 1 bis 12.

14. Verfahren zum Beladen mindestens einer Transportspülmaschine (1, 1') der Anordnung nach Anspruch 13 mit Spülgutteilen (9a, 9b, 9c), wobei das Verfahren die folgenden Verfahrensschritte aufweist:
- es werden Spülgutteile (9a, 9b, 9c) zu mindestens einem Beladebereich der mindestens einen Transportspülmaschine (1, 1') zugeführt;
- beim Zuführen der Spülgutteile (9a, 9b, 9c) zu dem mindestens einen Beladebereich der mindestens einen Transportspülmaschine (1, 1') wird mindestens einer der nachfolgenden Parameter der Spülgutteile (9a, 9b, 9c) erfasst:
i) eine Art der Spülgutteile (9a, 9b, 9c) und/oder eine relative Position der Spülgutteile (9a, 9b, 9c);
ii) einen Verschmutzungsgrad der Spülgutteile (9a, 9b, 9c); und/oder
iii) eine Ordnung der Spülgutteile (9a, 9b, 9c) und/oder eine Ausrichtung der Spülgutteile (9a, 9b, 9c),
wobei in Abhängigkeit von mindestens einem der erfassten Parameter eine Zuführung der Spülgutteile (9a, 9b, 9c) zu dem mindestens einen Beladebereich der mindestens einen Transportspülmaschine (1, 1') gesteuert wird,
**dadurch gekennzeichnet,**
**dass** beim Zuführen der Spülgutteile (9a, 9b, 9c) zu dem mindestens einen Beladebereich der mindestens einen Transportspülmaschine (1, 1') die Art der Spülgutteile (9a, 9b, 9c) erfasst wird, eine Zuführung mindestens eines Spülgutteils (9a, 9b, 9c) zu dem mindestens einen Beladebereich der mindestens einen Transportspülmaschine (1, 1') unterbrochen oder nicht zugelassen wird, wenn erfasst wird, dass das mindestens eine Spülgutteil (9a, 9b, 9c) nicht zu einer vorab festgelegten oder festlegbaren Spülgutart gehört oder wenn mit dem Erfassungssystem (15) das Spülgutteil (9a, 9b, 9c) nicht einer vorab festgelegten oder festlegbaren Spülgutart zuordenbar ist; und/oder
**dass** beim Zuführen der Spülgutteile (9a, 9b, 9c) zu dem mindestens einen Beladebereich der mindestens einen Transportspülmaschine (1, 1') ein Verschmutzungsgrad der Spülgutteile (9a, 9b, 9c) erfassen wird, wobei in Abhängigkeit von dem erfassten Verschmutzungsgrad die Zuführung der Spülgutteile (9a, 9b, 9c) zu dem mindestens einen Beladebereich der mindestens einen Transportspülmaschine (1, 1') zugelassen oder unterbrochen wird, und/oder wobei in Abhängigkeit von dem erfassten Verschmutzungsgrad mindestens ein Manipulator (12a, 12b) angesteuert wird, dass die Spülgutteile (9a, 9b, 9c) von dem mindestens einen Manipulator (12a, 12b) von einem Zufuhrförderband (11) abgenommen und - in Abhängigkeit von dem erfassten Verschmutzungsgrad - entweder auf einer Transportspur (2, 2', 3) der mindestens einen Transportspülmaschine (1, 1') oder in einen Ablagebereich extern der mindestens einen Transportspülmaschine (1, 1') und insbesondere bei einer Vorabräumstation platziert werden.

## Claims

1. A system (10) for loading at least one conveyor warewasher (1, 1') with washware (9a, 9b, 9c), wherein the system (10) comprises the following:
- a feed conveyor belt (11) for delivering washware (9a, 9b, 9c) to at least one loading region of the at least one conveyor warewasher (1, 1');
- a loading arrangement having at least one manipulator (12a, 12b), which is configured so as to automatically remove washware (9a, 9b, 9c) from the feed conveyor belt (11) and place it on at least one conveyor track (2, 2', 3) of the at least one conveyor warewasher (1, 1'); and
- a detection system (15), in particular an optical one, which is configured so as to detect at least one of the following parameters of the washware (9a, 9b, 9c) on the feed conveyor belt (11) when delivering the washware (9a, 9b, 9c) to the at least one loading region of the at least one conveyor warewasher (1, 1'):
i) a type of the washware (9a, 9b, 9c), and/or a relative position of the washware (9a, 9b, 9c) on the feed conveyor belt (11);
ii) a degree of soiling of the washware (9a, 9b, 9c); and/or
iii) an order of the washware (9a, 9b, 9c) and/or an alignment of the washware (9a, 9b, 9c) relative to the feed conveyor belt (11),
wherein the detection system (15) has an assigned evaluation device, which is configured so as to control the delivery of the washware (9a, 9b, 9c) to the at least one loading region as a function of at least one of the parameters detected by means of the detection system (15) and/or to actuate the at least one manipulator (12a, 12b) of the loading arrangement, wherein the detection system (15) is configured so as to detect the type of the washware (9a, 9b, 9c) when delivering the washware (9a, 9b, 9c) to the at least one loading region of the at least one conveyor warewasher (1, 1'), **characterized in that**
the evaluation device is configured so as to interrupt or prohibit a delivery of at least one washware piece (9a, 9b, 9c) to the loading arrangement when the detection system (15) detects that the at least one washware piece (9a, 9b, 9c) does not belong to a predetermined or determinable washware type or when the washware (9a, 9b, 9c) is not allocable to a predetermined or determinable washware type with the detection system (15).

2. The system (10) according to claim 1,
wherein the detection system (15) is configured so as to detect at least one type of washware of the following types of washware when delivering the washware (9a, 9b, 9c) to the at least one loading region of the at least one conveyor warewasher (1, 1'), in particular on the basis of the size, the shape, and/or the material of the washware (9a, 9b, 9c):
- a first washware type comprising cutlery and/or pieces of cutlery made of a metal, in particular stainless steel;
- a second washware type comprising containers, in particular GN containers and/or pots made of a metal, in particular stainless steel;
- a third washware type comprising trays or tray-like articles made of a plastic material; and
- a fourth washware type comprising porcelain, a porcelain-like
material, or dishes made of stoneware, in particular plates, cups, and/or bowls; and/or
- a fifth washware type comprising glass or dishes and/or glasses made from a glass-like material, in particular drinking glasses,
wherein the evaluation device is configured in particular so as to actuate the at least one manipulator (12a, 12b) of the loading arrangement as a function of a detected washware type in such a manner that the washware of the detected washware type is removed from the feed conveyor belt (11) by the at least one manipulator (12a, 12b) and placed on a conveyor track (2, 2', 3), in particular one that is assigned to the detected washware type, of the at least one conveyor warewasher (1, 1').

3. The system (10) according to claim 1 or 2 or according to the preamble of claim 1,
**characterized in that**
the detection system (15) is configured so as to detect a degree of soiling of the washware (9a, 9b, 9c) when delivering the washware (9a, 9b, 9c) to the at least one loading region of the at least one conveyor warewasher (1, 1'), wherein the evaluation device is configured so as to allow or interrupt the delivery of the washware (9a, 9b, 9c) to the loading arrangement as a function of the degree of soiling detected, and/or wherein the evaluation device is configured so as to actuate the at least one manipulator (12a, 12b) of the loading arrangement as a function of the degree of soiling detected such that the washware (9a, 9b, 9c) of the at least one manipulator (12a, 12b) is removed from the feed conveyor belt (11) and - depending on the degree of soiling detected - placed either on a conveyor track (2, 2', 3) of the at least one conveyor warewasher (1, 1') or into a storage region external to the at least one conveyor warewasher (1, 1'), and in particular at a precleaning station.

4. The system (10) according to claim 3,
wherein the detection system (15) is configured so as to detect a degree of soiling of the washware (9a, 9b, 9c) when delivering the washware (9a, 9b, 9c) to the at least one loading region of the at least one conveyor warewasher (1, 1'), wherein the evaluation device is configured so as to allow or interrupt the delivery of the washware (9a, 9b, 9c) to the loading arrangement as a function of the degree of soiling detected, wherein the evaluation device is further configured so as to interrupt the delivery of at least one washware piece (9a, 9b, 9c) to the loading arrangement when a degree of soiling is detected on the washware (9a, 9b, 9c) that exceeds a predetermined threshold value.

5. The system (10) according to claim 3 or 4,
wherein the feed conveyor belt (11) is configured so as to deliver the washware (9a, 9b, 9c) in batches to the at least one loading region of the at least one conveyor warewasher (1, 1'), wherein each batch preferably comprises a tray (9b), optionally with washware (9a, 9c) placed or stored on the tray (9b), in particular at least one place setting, wherein the detection system (15) is configured in particular so as to detect the at least one parameter of the washware (9a, 9b, 9c) per batch, and wherein the evaluation device is configured so as to allow or interrupt the delivery of the batch to the loading arrangement as a function of the detected parameter of a batch.

6. The system (10) according to any of claims 1 to 5,
wherein the feed conveyor belt (11) is configured so as to deliver the washware (9a, 9b, 9c) by batch to the at least one loading region of the at least one conveyor warewasher (1, 1'), wherein each batch preferably comprises a tray (9b), optionally with washware (9a, 9c) placed or stored on the tray (9b), in particular at least one place setting, wherein the detection system (15) is configured so as to detect an order of the washware (9a, 9b, 9c) per batch when delivering the washware (9a, 9b, 9c) by batch to the at least one loading region of the at least one conveyor warewasher (1, 1'), wherein the evaluation device is configured so as to allow the delivery of the batch of the washware (9a, 9b, 9c) to the loading arrangement as a function of the order detected, wherein the evaluation device is preferably configured in particular so as to allow the delivery of the batch of the washware (9a, 9b, 9c) to the loading arrangement when the detection system (15) detects that the washware (9a, 9b, 9c) is scattered in the batch.

7. The system (10) according to claim 6,
wherein the evaluation device is configured so as to prohibit or interrupt the delivery of the batch of the washware (9a, 9b, 9c) to the loading arrangement when the detection system (15) detects that a predetermined or determinable number of washware pieces (9a, 9b, 9c) is present in the batch in an overlapping manner at least in regions.

8. The system (10) according to any of claims 1 to 7,
wherein the detection system (15) is configured so as to detect an alignment of at least one of the washware pieces (9a, 9b, 9c) relative to the feed conveyor belt (11) when delivering the washware (9a, 9b, 9c) to the at least one loading region of the at least one conveyor warewasher (1, 1'), wherein the evaluation device is configured so as to allow or interrupt the delivery at least of the at least one washware piece (9a, 9b, 9c) to the loading arrangement as a function of the detected alignment of the at least one washware piece (9a, 9b, 9c) relative to the feed conveyor belt (11), wherein the evaluation device is configured in particular so as to not allow or to interrupt the delivery to the loading arrangement when the detection system (15) detects that the at least one washware piece (9a, 9b, 9c) deviates from at least one predetermined or determinable target alignment.

9. The system (10) according to any of claims 1 to 8,
wherein the feed conveyor belt (11) has an assigned discharge switch (16), which is preferably arranged upstream of the at least one loading region of the at least one conveyor warewasher (1, 1') and downstream of the detection system (15) and which is configured so as to discharge as needed at least one washware piece (9a, 9b, 9c), and in particular washware pieces (9a, 9b, 9c) by batch, out of the feed conveyor belt (11), wherein the evaluation device is configured so as to actuate the discharge switch (16) when a delivery of at least one washware piece (9a, 9b, 9c) to the loading arrangement is not allowable or is to be interrupted.

10. The system (10) according to claim 9,
wherein the discharge switch (16) is configured so as to discharge as needed at least one washware piece (9a, 9b, 9c), and in particular washware pieces (9a, 9b, 9c) by batch, out of the feed conveyor belt (11) into an outlet region (17), wherein the outlet region (17) is preferably configured for precleaning, in particular manually, of the washware (9a, 9b, 9c) that has been discharged into the outlet region (17).

11. The system (10) according to claim 9 or 10,
wherein the discharge switch (16) is configured so as to discharge as needed at least one washware piece (9a, 9b, 9c), and in particular washware pieces (9a, 9b, 9c) by batch, out of the feed conveyor belt (11) into a return conveyor belt (18), wherein the return conveyor belt (18) is configured at least in regions for precleaning, in particular manually, of the at least one washware piece (9a, 9b, 9c) that has been discharged into the return conveyor belt (18), and wherein an upstream end region of the return conveyor belt (18) is connected to an in-feed switch (19) in a conveying manner for the loading, at least as needed, of the at least one precleaned washware piece (9a, 9b, 9c) into the feed conveyor belt (11), wherein the in-feed switch (19) preferably leads into the feed conveyor belt (11) upstream of the detection system (15).

12. The system (10) according to any of claims 1 to 11,
wherein the feed conveyor belt (11) has an assigned in-feed switch (19), which is configured so as to load as needed at least one washware piece (9a, 9b, 9c), and in particular washware pieces by batch (9a, 9b, 9c), into the feed conveyor belt (11), wherein the in-feed switch (19) preferably leads into the feed conveyor belt (11) upstream of the detection system (15) and wherein the in-feed switch (19) preferably connects in a conveying manner a region that is configured for manual precleaning to the feed conveyor belt (11).

13. An arrangement consisting of at least one conveyor warewasher (1, 1') and one loading system according to any of claims 1 to 12.

14. A method of loading at least one conveyor warewasher (1, 1') of the arrangement according to claim 13 with washware (9a, 9b, 9c), wherein the method comprises the following method steps:
- washware (9a, 9b, 9c) is delivered to at least one loading region of the at least one conveyor warewasher (1, 1');
- when delivering the washware (9a, 9b, 9c) to the at least one loading region of the at least one conveyor warewasher (1, 1'), at least one of the following parameters of the washware (9a, 9b, 9c) is detected:
i) a type of the washware (9a, 9b, 9c) and/or a relative position of the washware (9a, 9b, 9c);
ii) a degree of soiling of the washware (9a, 9b, 9c); and/or
iii) an order of the washware (9a, 9b, 9c) and/or an alignment of the washware (9a, 9b, 9c),
wherein, as a function of at least one of the detected parameters, a delivery of the washware (9a, 9b, 9c) to the at least one loading region of the at least one conveyor warewasher (1, 1') is controlled,
**characterized in that**
when delivering the washware (9a, 9b, 9c) to the at least one loading region of the at least one conveyor warewasher (1, 1'), the type of washware (9a, 9b, 9c) is detected, [and] a delivery of at least one washware piece (9a, 9b, 9c) to the at least one loading region of the at least one conveyor warewasher (1, 1') is interrupted or not allowed when it is detected that the at least one washware piece (9a, 9b, 9c) does not belong to a predetermined or determinable type of washware or if the washware piece (9a, 9b, 9c) is not assignable by means of the detection system (15) to a predetermined or determinable type of washware; and/or
a degree of soiling of the washware (9a, 9b, 9c) is detected when delivering the washware (9a, 9b, 9c) to the at least one loading region of the at least one conveyor warewasher (1, 1'), wherein the delivery of the washware (9a, 9b, 9c) to the loading arrangement of the at least one conveyor warewasher (1, 1') is allowed or interrupted as a function of the degree of soiling detected, and/or wherein at least one manipulator (12a, 12b) is actuated as a function of the degree of soiling detected such that the washware (9a, 9b, 9c) of the at least one manipulator (12a, 12b) is removed from a feed conveyor belt (11) and - depending on the degree of soiling detected - placed either on a conveyor track (2, 2', 3) of the at least one conveyor warewasher (1, 1') or into a storage region external to the at least one conveyor warewasher (1, 1'), and in particular at a precleaning station.

## Revendications

1. Système (10) permettant le chargement d'au moins un lave-vaisselle à convoyeur (1, 1') avec des articles de vaisselle (9a, 9b, 9c), dans lequel le système (10) comprend ce qui suit :
- une bande transporteuse d'alimentation (11) pour l'acheminement de la vaisselle (9a, 9b, 9c) à au moins une zone de chargement de l'au moins un lave-vaisselle à convoyeur (1, 1') ;
- un dispositif de chargement ayant au moins un manipulateur (12a, 12b), qui est configuré afin de retirer automatiquement la vaisselle (9a, 9b, 9c) de la bande transporteuse d'alimentation (11) et de la placer sur au moins une piste de transport (2, 2', 3) de l'au moins un lave-vaisselle à convoyeur (1, 1') ; et
- un système de détection (15), en particulier un système optique, qui est configuré afin de détecter au moins un des paramètres suivants de la vaisselle (9a, 9b, 9c) sur la bande transporteuse d'alimentation (11) lors de l'acheminement de la vaisselle (9a, 9b, 9c) à l'au moins une zone de chargement de l'au moins un lave-vaisselle à convoyeur (1, 1') :
i) un type de la vaisselle (9a, 9b, 9c), et/ou une position relative de la vaisselle (9a, 9b, 9c) sur la bande transporteuse d'alimentation (11) ;
ii) un degré de salissure de la vaisselle (9a, 9b, 9c) ; et/ou
iii) un ordre de la vaisselle (9a, 9b, 9c) et/ou un alignement de la vaisselle (9a, 9b, 9c) par rapport à la bande transporteuse d'alimentation (11),
dans lequel le système de détection (15) a un dispositif d'évaluation attribué, qui est configuré afin de commander l'acheminement de la vaisselle (9a, 9b, 9c) à l'au moins une zone de chargement en fonction d'au moins un des paramètres détectés au moyen du système de détection (15) et/ou à actionner l'au moins un manipulateur (12a, 12b) du dispositif de chargement, dans lequel
le système de détection (15) est configuré afin de détecter le type de la vaisselle (9a, 9b, 9c) lors de l'acheminement de la vaisselle (9a, 9b, 9c) à l'au moins une zone de chargement de l'au moins un lave-vaisselle à convoyeur (1, 1'), **caractérisé en ce que**
le dispositif d'évaluation est configuré afin d'interrompre ou d'interdire un acheminement d'au moins un article de vaisselle (9a, 9b, 9c) au dispositif de chargement lorsque le système de détection (15) détecte que l'au moins un article de vaisselle (9a, 9b, 9c) n'appartient pas à un type de vaisselle prédéterminé ou déterminable ou lorsque la vaisselle (9a, 9b, 9c) n'est pas attribuable à un type de vaisselle prédéterminé ou déterminable avec le système de détection (15).

2. Système (10) selon la revendication 1,
dans lequel le système de détection (15) est configuré afin de détecter au moins un type de vaisselle parmi les types de vaisselle suivants lors de l'acheminement de la vaisselle (9a, 9b, 9c) à l'au moins une zone de chargement de l'au moins un lave-vaisselle à convoyeur (1, 1'), en particulier sur la base de la taille, de la forme et/ou du matériau de la vaisselle (9a, 9b, 9c) :
- un premier type de vaisselle comprenant des couverts et/ou des pièces de coutellerie réalisés en un métal, en particulier en acier inoxydable ;
- un deuxième type de vaisselle comprenant des récipients, en particulier des récipients et/ou des pots réalisés en un métal, en particulier en acier inoxydable ;
- un troisième type de vaisselle comprenant des plateaux ou des articles en forme de plateau réalisés en une matière plastique ; et
- un quatrième type de vaisselle comprenant de la porcelaine, un matériau semblable à de la porcelaine, ou des pièces en grès, en particulier des assiettes, gobelets, et/ou bols ; et/ou
- un cinquième type de vaisselle comprenant du verre ou de la vaisselle et/ou des verres fabriqués à partir d'un matériau semblable à du verre, en particulier des verres à boire,
dans lequel le dispositif d'évaluation est configuré en particulier afin d'actionner l'au moins un manipulateur (12a, 12b) du dispositif de chargement en fonction d'un type de vaisselle détecté de telle sorte que la vaisselle du type de vaisselle détecté est retirée de la bande transporteuse d'alimentation (11) par l'au moins un manipulateur (12a, 12b) et placée sur une piste de transport (2, 2', 3), en particulier une qui est attribuée au type de vaisselle détectée de l'au moins un lave-vaisselle à convoyeur (1, 1').

3. Système (10) selon la revendication 1 ou 2, ou selon le préambule de la revendication 1,
**caractérisé en ce que**
le système de détection (15) est configuré afin de détecter un degré de salissure de la vaisselle (9a, 9b, 9c) lors de l'acheminement de la vaisselle (9a, 9b, 9c) à la ou aux zones de chargement du ou des lave-vaisselle à convoyeur (1, 1'), dans lequel le dispositif d'évaluation est configuré afin de permettre ou d'interrompre l'acheminement de la vaisselle (9a, 9b, 9c) au dispositif de chargement en fonction du degré de salissure détecté, et/ou dans lequel le dispositif d'évaluation est configuré afin d'actionner l'au moins un manipulateur (12a, 12b) du dispositif de chargement en fonction du degré de salissure détecté de sorte que la vaisselle (9a, 9b, 9c) de l'au moins un manipulateur (12a, 12b) est retirée de la bande transporteuse d'alimentation (11) et - en fonction du degré de salissure détecté - placée soit sur une piste de transport (2, 2', 3) de l'au moins un lave-vaisselle à convoyeur (1, 1') ou dans une zone de stockage extérieure à l'au moins un lave-vaisselle à convoyeur (1, 1'), et en particulier à un poste de pré-nettoyage.

4. Système (10) selon la revendication 3,
dans lequel le système de détection (15) est configuré afin de détecter un degré de salissure de la vaisselle (9a, 9b, 9c) lors de l'acheminement de la vaisselle (9a, 9b, 9c) à la ou aux zones de chargement de l'au moins un lave-vaisselle à convoyeur (1, 1'), dans lequel le dispositif d'évaluation est configuré afin de permettre ou d'interrompre l'acheminement de la vaisselle (9a, 9b, 9c) au dispositif de chargement en fonction du degré de salissure détecté, dans lequel le dispositif d'évaluation est en outre configuré afin d'interrompre l'acheminement d'au moins un article de vaisselle (9a, 9b, 9c) au dispositif de chargement lorsqu'un degré de salissure est détecté sur la vaisselle (9a, 9b, 9c) qui dépasse une valeur seuil prédéterminée.

5. Système (10) selon la revendication 3 ou 4,
dans lequel la bande transporteuse d'alimentation (11) est configurée afin d'acheminer la vaisselle (9a, 9b, 9c) par lots vers la ou les zones de chargement de l'au moins un lave-vaisselle à convoyeur (1, 1'), dans lequel chaque lot comprend de préférence un plateau (9b), éventuellement avec de la vaisselle (9a, 9c) placée ou stockée sur le plateau (9b), en particulier au moins une configuration de place, dans lequel le système de détection (15) est configuré en particulier afin de détecter l'au moins un paramètre de la vaisselle (9a, 9b, 9c) par lot, et dans lequel le dispositif d'évaluation est configuré afin de permettre ou d'interrompre l'acheminement du lot au dispositif de chargement en fonction du paramètre détecté d'un lot.

6. Système (10) selon l'une quelconque des revendications 1 à 5,
dans lequel la bande transporteuse d'alimentation (11) est configurée afin d'acheminer la vaisselle (9a, 9b, 9c) par lot vers l'au moins une zone de chargement de l'au moins un lave-vaisselle à convoyeur (1, 1'), dans lequel chaque lot comprend de préférence un plateau (9b), éventuellement avec de la vaisselle (9a, 9c) placée ou stockée sur le plateau (9b), en particulier au moins une configuration de place, dans lequel le système de détection (15) est configuré afin de détecter un ordre de la vaisselle (9a, 9b, 9c) par lot lors de l'acheminement de la vaisselle (9a, 9b, 9c) par lot vers l'au moins une zone de chargement du ou des lave-vaisselle à convoyeur (1, 1'), dans lequel le dispositif d'évaluation est configuré afin de permettre l'acheminement du lot de la vaisselle (9a, 9b, 9c) au dispositif de chargement en fonction de l'ordre détecté, dans lequel le dispositif d'évaluation est de préférence configuré en particulier afin de permettre l'acheminement du lot de la vaisselle (9a, 9b, 9c) au dispositif de chargement lorsque le système de détection (15) détecte que la vaisselle (9a, 9b, 9c) est dispersée dans le lot.

7. Système (10) selon la revendication 6,
dans lequel le dispositif d'évaluation est configuré afin d'empêcher ou d'interrompre l'acheminement du lot de la vaisselle (9a, 9b, 9c) au dispositif de chargement lorsque le système de détection (15) détecte qu'un nombre prédéterminé ou déterminable d'articles de vaisselle (9a, 9b, 9c) est présent dans le lot d'une manière chevauchante au moins dans des zones.

8. Système (10) selon l'une quelconque des revendications 1 à 7, dans lequel le système de détection (15) est configuré afin de détecter un alignement d'au moins un des articles de vaisselle (9a, 9b, 9c) par rapport à la bande transporteuse d'alimentation (11) lors de l'acheminement de la vaisselle (9a, 9b, 9c) à l'au moins une zone de chargement de l'au moins un lave-vaisselle à convoyeur (1, 1'), dans lequel le dispositif d'évaluation est configuré afin de permettre ou d'interrompre l'acheminement d'au moins un article de vaisselle (9a, 9b, 9c) au dispositif de chargement en fonction de l'alignement détecté de l'au moins un article de vaisselle (9a, 9b, 9c) par rapport à la bande transporteuse d'alimentation (11), dans lequel le dispositif d'évaluation est configuré en particulier afin de ne pas permettre ou d'interrompre l'acheminement au dispositif de chargement lorsque le système de détection (15) détecte que l'au moins un article de vaisselle (9a, 9b, 9c) s'écarte d'au moins un alignement cible prédéterminé ou déterminable.

9. Système (10) selon l'une des revendications 1 à 8,
dans lequel la bande transporteuse d'alimentation (11) a un commutateur de décharge (16) attribué, qui est de préférence agencé en amont de l'au moins une zone de chargement de l'au moins un lave-vaisselle à convoyeur (1, 1') et en aval du système de détection (15) et qui est configuré afin de décharger selon les besoins au moins un article de vaisselle (9a, 9b, 9c), et en particulier des articles de vaisselle (9a, 9b, 9c) par lot, hors de la bande transporteuse d'alimentation (11), dans lequel le dispositif d'évaluation est configuré afin d'actionner le commutateur de décharge (16) lorsqu'un acheminement d'au moins un article de vaisselle (9a, 9b, 9c) au dispositif de chargement n'est pas admissible ou doit être interrompu.

10. Système (10) selon la revendication 9,
dans lequel le commutateur de décharge (16) est configuré afin de décharger selon les besoins au moins un article de vaisselle (9a, 9b, 9c), et en particulier des articles de vaisselle (9a, 9b, 9c) par lot, hors de la bande transporteuse d'alimentation (11) dans une zone de sortie (17), dans lequel la zone de sortie (17) est de préférence configurée pour le pré-nettoyage, en particulier manuellement, de la vaisselle (9a, 9b, 9c) qui a été déchargée dans la zone de sortie (17).

11. Système (10) selon la revendication 9 ou 10,
dans lequel le commutateur de décharge (16) est configuré afin de décharger selon les besoins au moins un article de vaisselle (9a, 9b, 9c), et en particulier des articles de vaisselle (9a, 9b, 9c) par lot, hors de la bande transporteuse d'alimentation (11) dans une bande transporteuse de retour (18), dans lequel la bande transporteuse de retour (18) est configurée au moins dans des zones pour le pré-nettoyage, en particulier manuellement, de l'au moins un article de vaisselle (9a, 9b, 9c) qui a été déchargé dans la bande transporteuse de retour (18), et dans lequel une zone d'extrémité amont de la bande transporteuse de retour (18) est reliée à un commutateur d'alimentation (19) d'une manière de convoyage pour le chargement, au moins selon les besoins, de l'au moins un article de vaisselle pré-nettoyé (9a, 9b, 9c) dans la bande transporteuse d'alimentation (11), dans lequel l'interrupteur d'alimentation (19) mène de préférence dans la bande de convoyeur d'alimentation (11) en amont du système de détection (15).

12. Système (10) selon l'une quelconque des revendications 1 à 11,
dans lequel la bande transporteuse d'alimentation (11) a un commutateur d'alimentation attribué (19), qui est configuré afin de charger selon les besoins au moins un article de vaisselle (9a, 9b, 9c), et en particulier des articles de vaisselle par lot (9a, 9b, 9c), dans la bande transporteuse d'alimentation (11), dans lequel le commutateur d'alimentation (19) mène de préférence dans la bande transporteuse d'alimentation (11) en amont du système de détection (15) et dans lequel l'interrupteur d'alimentation (19) relie de préférence de manière convoyée une zone qui est configurée pour un pré-nettoyage manuel à la bande transporteuse d'alimentation (11).

13. Agencement constitué d'au moins un lave-vaisselle à convoyeur (1, 1') et d'un système de chargement selon l'une quelconque des revendications 1 à 12.

14. Procédé de chargement d'au moins un lave-vaisselle à convoyeur (1, 1') de l'agencement selon la revendication 13 avec de la vaisselle (9a, 9b, 9c), dans lequel le procédé comprend les étapes de procédé suivantes :
- de la vaisselle (9a, 9b, 9c) est acheminée à au moins une zone de chargement de l'au moins un lave-vaisselle à convoyeur (1, 1') ;
- lors de l'acheminement de la vaisselle (9a, 9b, 9c) à l'au moins une zone de chargement de l'au moins un lave-vaisselle à convoyeur (1, 1'), au moins un des paramètres suivants de la vaisselle (9a, 9b, 9c) est détecté :
i) un type de la vaisselle (9a, 9b, 9c) et/ou une position relative de la vaisselle (9a, 9b, 9c) ;
ii) un degré de salissure de la vaisselle (9a, 9b, 9c) ; et/ou
iii) un ordre de la vaisselle (9a, 9b, 9c) et/ou un alignement de la vaisselle (9a, 9b, 9c),
dans lequel, en fonction d'au moins un des paramètres détectés, une distribution de la vaisselle (9a, 9b, 9c) à l'au moins une zone de chargement de l'au moins un lave-vaisselle à convoyeur (1, 1') est commandée,
**caractérisé en ce que**
lors de l'acheminement de la vaisselle (9a, 9b, 9c) à l'au moins une zone de chargement de l'au moins un lave-vaisselle à convoyeur (1, 1'), le type de vaisselle (9a, 9b, 9c) est détecté, [et] un acheminement d'au moins un article de vaisselle (9a, 9b, 9c) à l'au moins une zone de chargement de l'au moins un lave-vaisselle à convoyeur (1, 1') est interrompue ou non autorisée lorsqu'il est détecté que l'au moins un article de vaisselle (9a, 9b, 9c) n'appartient pas à un type prédéterminé ou déterminable de vaisselle ou si l'article de vaisselle (9a, 9b, 9c) n'est pas attribuable au moyen du système de détection (15) à un type prédéterminé ou déterminable de vaisselle ; et/ou
un degré de salissure de la vaisselle (9a, 9b, 9c) est détecté lors de l'acheminement de la vaisselle (9a, 9b, 9c) à à l'au moins une zone de chargement de l'au moins un lave-vaisselle à convoyeur (1, 1'), dans lequel l'acheminement de la vaisselle (9a, 9b, 9c) au dispositif de chargement dudit au moins un lave-vaisselle à convoyeur (1, 1') est autorisé ou interrompu en fonction du degré de salissure détecté, et/ou dans lequel au moins un manipulateur (12a, 12b) est actionné en fonction du degré de salissure détecté de sorte que la vaisselle (9a, 9b, 9c) de l'au moins un manipulateur (12a, 12b) est retirée d'une bande transporteuse d'alimentation (11) et - en fonction du degré de salissure détecté - placée soit sur une piste de transport (2, 2', 3) de l'au moins un lave-vaisselle à convoyeur (1, 1') ou dans une zone de stockage extérieure à l'au moins un lave-vaisselle à convoyeur (1, 1'), et en particulier à un poste de pré-nettoyage.
